# EUROPÄISCHE PATENTSCHRIFT

(11) **EP 3 150 518 B1**
(45) Veröffentlichungstag und Bekanntmachung des Hinweises auf die Patenterteilung: **05.12.2018**
(21) Anmeldenummer: 16192193.7
(22) Anmeldetag: 04.10.2016
(51) Int. Cl.: B65G 21/10, B65G 59/02, B65G 67/24

(54) **VERFAHREN UND VORRICHTUNG ZUM FÖRDERN VON STÜCKGÜTERN VON EINEM STAPEL ODER HAUFEN**
METHOD AND DEVICE FOR CONVEYING PIECE GOODS OF A PILE OR HEAP
PROCÉDÉ ET DISPOSITIF DE CONVOYAGE DE MARCHANDISES DEPUIS UNE PILE OU UN TAS

(30) Priorität: 01.10.2015 DE 102015116720
(43) Veröffentlichungstag der Anmeldung: 05.04.2017
(73) Patentinhaber: Deutsche Post AG, 53113 Bonn (DE)
(72) Erfinder: Hartmann, Bernd, 53501 Grafschaft-Leimersdorf (DE); Grafe, Dr. Wolfram, 18107 Elmenhorst (DE)
(74) Vertreter: Cohausz & Florack

(56) Entgegenhaltungen:
- EP-A1- 2 241 403
- EP-A1- 2 411 190
- DE-A1-102005 010 380
- DE-B3-102007 017 416
- US-A1- 2001 009 217
- US-A1- 2014 341 694
- Johann Wolfgang Von Goethe: "bionics in progress ist ein Lehrprojekt für das WS 06/07 und SS 07 für Studenten im Hauptstudium aus: -Integriertes Design", , 31. Dezember 2007 (2007-12-31), Seiten 1-9, XP055348347, Gefunden im Internet: URL:http://bionic.hfk-bremen.de/bionicweb/ dokumentation_gruppe3.pdf [gefunden am 2017-02-21]

## Beschreibung

### Gebiet

Die Erfindung betrifft ein Verfahren zum Fördern von Stückgütern, insbesondere Packstücken, von einem Stapel und/oder Haufen von Stückgütern. Ferner betrifft die Erfindung eine Bandfördereinrichtung, vorzugsweise einen Teleskopbandförderer, zum Fördern von Stückgütern, insbesondere Packstücken, mit einem um eine Tragkonstruktion umlaufenden Förderband.

### Hintergrund

Es sind bereits unterschiedliche Verfahren zum Fördern von Stückgütern, insbesondere Packstücken, sowie hierzu eingesetzte Bandfördereinrichtungen bekannt. Sie werden beispielsweise eingesetzt, um gestapelte oder aufgehäufte Stückgüter aus einem Laderaum, insbesondere eines Lastkraftwagens, Sattelaufliegers, Anhängers, Containers, Transportbehälters, Wechselbehälters und/oder Rollbehälters, zu entladen. Die Stückgüter, bei denen es sich um Packstücke handeln kann, werden dabei zunächst vom Stapel oder Haufen herunterbewegt und danach weitertransportiert, um beispielsweise einer Sortierung, Zwischenlagerung oder anderweitigen Bearbeitung zugeführt zu werden.

Das Fördern von zu einem Stapel oder einem Haufen zusammengefügten Stückgütern ist, insbesondere bei leicht zu beschädigenden Stückgütern, nicht immer unproblematisch durchzuführen. Daher können in der Praxis Stückgüter nicht immer zufriedenstellend von Stapeln oder Haufen wegbewegt werden, so dass ein Optimierungsbedarf hinsichtlich des entsprechenden Handlings von Stückgütern besteht.

Aus dem Dokument US2014/0341694 A1 ist ein Verfahren zum Fördern von Stückgütern nach dem Oberbegriff des Anspruchs 1 bekannt.

Aus dem Dokument US2001/0009217 A1 ist ein Verfahren zum Fördern von Stückgütern nach dem Oberbegriff des Anspruchs 9 und eine Bandfördereinrichtung nach dem Oberbegriff des Anspruchs 12 bekannt.

### Zusammenfassung der Ausführungsformen der Erfindung

Der vorliegenden Erfindung liegt die Aufgabe zu Grunde, die Verfahren und die Bandfördereinrichtung jeweils der eingangs genannten und zuvor näher beschriebenen Art derart auszugestalten und weiterzubilden, dass ein zufriedenstellendes Stückguthandling bewerkstelligt werden kann.

Diese Aufgabe ist gemäß Anspruch 1 gelöst durch ein Verfahren zum Fördern von Stückgütern, insbesondere Packstücken, von einem Stapel und/oder Haufen von Stückgütern, unter Verwendung einer Fingereinheit umfassend wenigstens zwei sich gemeinsam von einem Ende der Fingereinheit zu einem gegenüberliegenden Ende der Fingereinheit erstreckende flexible Flankenelemente, wobei die wenigstens zwei flexiblen Flankenelemente zwischen den beiden Enden der Fingereinheit über eine Mehrzahl von Stegen jeweils flexibel miteinander verbunden sind, so dass die Fingereinheit wenigstens von einer gekrümmten Stellung in eine gestreckte Stellung und zurück verstellbar ist,
- bei dem die Fingereinheit so in einer Greifrichtung von oben gegen den Stapel und/oder Haufen von Stückgütern gedrückt wird, so dass das wenigstens eine Flankenelement durch wenigstens ein Stückgut partiell eingedrückt wird,
- bei dem die Fingereinheit infolge des abschnittsweisen Eindrückens des wenigstens einen Flankenelements von einer gestreckten Stellung in eine gekrümmte Stellung verstellt und die Fingereinheit, vorzugsweise das wenigstens eine Flankenelement, dabei das wenigstens eine Stückgut wenigstens abschnittsweise umgreift und
- bei dem das wenigstens eine wenigstens abschnittsweise umgriffene Stückgut von der Fingereinheit wenigstens teilweise in eine senkrecht zur Greifrichtung weisende Transportrichtung vom Stapel und/oder Haufen bewegt wird.

Ferner ist die zuvor genannte Aufgabe gemäß Anspruch 9 gelöst durch ein Verfahren zum Fördern von Stückgütern, insbesondere Packstücken, von einem Stapel und/oder Haufen von Stückgütern, unter Verwendung einer Bandfördereinrichtung, vorzugsweise Teleskopbandförderer, zum Fördern von Stückgütern, insbesondere Packstücken, mit einem um eine Tragkonstruktion umlaufenden Förderband, wobei die Tragkonstruktion wenigstens eine das Förderband wenigstens in einer Betriebssituation stützende Fingereinheit aufweist, wobei die Fingereinheit wenigstens zwei sich gemeinsam von einem Ende der Fingereinheit zu einem gegenüberliegenden Ende der Fingereinheit erstreckende flexible Flankenelemente aufweist, wobei die wenigstens zwei flexiblen Flankenelemente zwischen den beiden Enden der Fingereinheit über eine Mehrzahl von Stegen jeweils flexibel miteinander verbunden sind, so dass die Fingereinheit wenigstens von einer gekrümmten Stellung in eine gestreckte Stellung und zurück verstellbar ist, wobei die Fingereinheit an einem freien Ende des Bandförderers vorgesehen ist und wobei wenigstens das dem freien Ende des Bandförderers zugeordnete Ende der wenigstens einen Fingereinheit eine Umlenkung, insbesondere Umlenkrolle, zum Umlenken des Förderbands aufweist,
- bei dem die Bandfördereinrichtung seitlich neben dem Stapel und/oder Haufen von Stückgütern positioniert wird,
- bei dem auf dem Stapel und/oder Haufen liegende Stückgüter vom Stapel und/oder Haufen auf das Förderband der Bandfördereinrichtung bewegt werden und
- bei dem die Fingereinheit während des Bewegens der Stückgüter von dem Stapel und/oder Haufen zur Verstellung des freien Endes der Bandfördereinrichtung nach oben oder unten zwischen wenigstens einer gekrümmten Stellung und einer gestreckten Stellung verstellt wird.

Des Weiteren ist die zuvor genannte Aufgabe bei einer Bandfördereinrichtung nach dem Oberbegriff von Anspruch 12 dadurch gelöst, dass die Tragkonstruktion wenigstens eine das Förderband wenigstens in einer Betriebssituation stützende Fingereinheit aufweist, dass die Fingereinheit wenigstens zwei sich gemeinsam von einem Ende der Fingereinheit zu einem gegenüberliegenden Ende der Fingereinheit erstreckende flexible Flankenelemente aufweist und dass die wenigstens zwei flexiblen Flankenelemente zwischen den beiden Enden der Fingereinheit über eine Mehrzahl von Stegen jeweils flexibel miteinander verbunden sind, so dass die Fingereinheit wenigstens von einer gekrümmten Stellung in eine gestreckte Stellung und zurück verstellbar ist.

Die Erfindung hat erkannt, dass zur Verbesserung des Handlings von einen Stapel und/oder einen Haufen bildenden Stückgütern in zweckmäßiger Weise eine Fingereinheit eingesetzt werden kann, die den sogenannten Fin Ray Effekt zeigt. Dabei wird unter einem Stapel eine Vielzahl von wenigstens im Wesentlichen regelmäßig aufeinander und nebeneinander angeordneten Stückgütern verstanden, während unter einem Haufen eine wenigstens im Wesentlichen ungeordnete Ansammlung aufeinander und nebeneinander vorgesehener Stückgüter angesehen wird. Bedarfsweise kann eine Ansammlung von Stückgütern sowohl stapelartige als auch haufenartige Abschnitte aufweisen, weshalb die Ansammlung sowohl teilweise stapelartig als auch teilweise haufenartig ausgebildet sein kann.

Der sogenannte Fin Ray Effekt kann bei den Schwanzflossen von Knochenfischen beobachtet werden. Drückt man mit dem Finger seitlich gegen sie, krümmen sich die Flossen nicht weg, sondern biegen sich dem Finger entgegen. Möglich wird dies durch einen speziellen Aufbau der Flossen. Dieser ist bei der Fingereinheit der Erfindung nachgebildet.

Und zwar weist die Fingereinheit wenigstens zwei sich gemeinsam von einem Ende der Fingereinheit zu einem gegenüberliegenden Ende der Fingereinheit erstreckende flexible Flankenelemente auf. Die Flexibilität kann beispielsweise durch elastische Flankenelemente oder durch eine Gliederkette aus schwenkbar oder gelenkig miteinander verbundenen starren Kettengliedern bereitgestellt werden. Dabei wird eine entsprechende Flexibilität lediglich in eine Raumrichtung gefordert. In den Raumrichtungen senkrecht dazu ist eine Flexibilität nicht zwingend erforderlich. Daher können die Flankenelemente auch problemlos beispielsweise streifenförmig ausgebildet werden. Alternativ ist aber auch eine stabförmige Ausgestaltung der Flankenelemente möglich. Die entsprechende Flexibilität der Flankenelemente erlaubt letztlich eine Krümmung der Fingereinheit ausgehend von einer gestreckten Stellung in eine gekrümmte Stellung beispielsweise ähnlich der Krümmung eines Fingers.

Damit die Krümmung der Fingereinheit in eine Richtung beispielsweise durch einen Druck gegen die Fingereinheit, insbesondere gegen ein Flankenelement, in die entgegengesetzte Richtung ausgelöst werden kann, sind die wenigstens zwei Flankenelemente zwischen den beiden Enden der Fingereinheit über eine Mehrzahl von Stegen jeweils flexibel miteinander verbunden. Dabei können die Stege starr ausgebildet und schwenkbar oder gelenkig mit den Flankenelementen verbunden sein. Es können aber, bedarfsweise alternativ zu schwenkbaren oder gelenkigen Verbindungen zu den wenigstens zwei Flankenelementen, auch flexible, insbesondere elastische Stege verwendet werden. Auf diese Weise wird erreicht, dass sich die Stege gegenüber den wenigstens zwei Flankenelementen verschwenken können, um so eine Krümmung der Fingereinheit von einer gestreckten Stellung in eine gekrümmte Stellung und zurück zu ermöglichen.

Unter einer gestreckten Stellung der Fingereinheit kann eine maximal gestreckte und/oder längliche Ausrichtung der Fingereinheit verstanden werden. Es kann sich aber auch um eine Stellung handeln, aus der die Fingereinheit durch ein weiteres Krümmen in eine gegenüber der gestreckten Stellung weiter gekrümmte Stellung verstellt werden kann. Dementsprechend muss auch die gekrümmte Stellung keine maximal gekrümmte Stellung sein. Die Begriffe gestreckte Stellung und gekrümmte Stellung können also bedarfsweise lediglich relativ, also als relative Positionen zueinander, verstanden werden. Des Weiteren ist zu berücksichtigen, dass die Fingereinheit aus einer gestreckten Stellung in entgegengesetzte Richtung in unterschiedliche gekrümmte Stellungen verstellt werden kann.

Die Fingereinheit ermöglicht aufgrund des entsprechenden Aufbaus letztlich eine Anpassung der Form an die Form der zu transportierenden Stückgüter wenn die Fingereinheit gegen das Stückgut drückt bzw. umgekehrt. Damit kann einerseits eine größere Anlagefläche von Fingereinheit und Stückgut bereitgestellt werden, was das Handling des Stückguts verbessert. Zudem kann die Flächenpressung zwischen Fingereinheit und Stückgut herabgesetzt werden, was ein beschädigungsfreies Stückguthandling begünstigt.

Der Aufbau der Fingereinheit erlaubt aber auch bedarfsweise eine Vorkrümmung einzustellen, auch ohne dass ein Kontakt zwischen der Fingereinheit und dem wenigstens einen Stückgut besteht. Dazu können beispielsweise die Flankenelemente in Längsrichtung der Fingereinheit gegeneinander verstellt werden. Dabei krümmt sich die Fingereinheit dann von dem Flankenelement weg, das gegenüber dem wenigstens einen weiteren Flankenelement weiter in Längsrichtung zum gegenüberliegenden Ende der Fingereinheit verstellt ist.

Um die Fingereinheit beispielsweise nicht nur in einer Ebene verstellen zu können, kann die Fingereinheit beispielsweise auch drei oder mehr Flankenelemente aufweisen, die untereinander über Stege miteinander verbunden sind. Dabei können die Stege beispielsweise kreuzförmig, sternförmig, rechteckig, quadratisch, oval oder rund ausgebildet sein, um einfach an allen Flankenelementen festgelegt werden zu können. Die entsprechenden Verbindungen sind dabei vorzugsweise entweder schwenkbar oder drehbare ausgebildet und/oder es sind die Stege flexibel ausgebildet.

Unter Packstücken wird eine besondere Art der Stückgüter verstanden. Packstücke sind mit Packungen verpackte Waren. Packstücke könne daher wenigstens eine Umverpackung aufweisen und beispielsweise als Pakete, Kisten und Behälter vorliegen.

Die zuvor beschriebene Fingereinheit kann gemäß dem Verfahren nach Anspruch 1 zum Herunterholen von Stückgütern insbesondere Packstücken von einem Stapel und/oder Haufen von Stückgütern genutzt werden. Dabei wird die wenigstens eine Fingereinheit gegen den Stapel und/oder Haufen von Stückgütern, insbesondere gegen wenigstens ein oben auf dem Stapel und/oder dem Haufen liegendes Stückgut gedrückt. Die Fingereinheit wird dazu wenigstens teilweise in einer Richtung bewegt, die als Greifrichtung bezeichnet werden kann. Das wenigstens eine Stückgut drückt nun gegen die Fingereinheit, insbesondere gegen wenigstens ein Flankenelement. Der Druck auf die Fingereinheit ist dabei so groß, dass die Fingereinheit, insbesondere das wenigstens eine Flankenelement, lokal eingedrückt wird. Dabei wird beispielsweise das wenigstens eine Flankenelement abschnittsweise gegen Streben und/oder in Richtung wenigstens eines weiteren Flankenelements bewegt. Infolgedessen und des Fin Ray Effekts der Fingereinheit wird wenigstens ein Flankenelement von einer gestreckten Stellung in eine gekrümmte Stellung verstellt. Dies bedeutet etwa, dass ein Teil des entsprechenden Flankenelements in Richtung des wenigstens einen Stückguts gebogen wird.

Das wenigstens eine Stückgut wird also durch das Eindrücken der Fingereinheit von der Fingereinheit, insbesondere von wenigstens einem Flankenelement, wenigstens abschnittsweise umgriffen. Dieses Umgreifen kann nun bedarfsweise einen Formschluss zwischen dem Fingerelement und dem wenigstens einen Stückgut in wenigstens eine Richtung bewirken. Jedenfalls kann das wenigstens eine wenigstens abschnittsweise umgriffene Stückgut von der Fingereinheit in eine Transportrichtung bewegt werden, die zumindest eine Bewegungskomponente senkrecht zur Greifrichtung aufweist. Dadurch wird das wenigstens eine Stückgut vom Stapel und/oder Haufen bewegt. Die Greifrichtung ist dabei der Einfachheit halber vorzugsweise wenigstens im Wesentlichen vertikal ausgerichtet, während die Transportrichtung wenigstens im Wesentlichen horizontal ausgerichtet ist.

Durch die autoadaptive Eigenschaft der Fingereinheit, die zu einem wenigstens teilweisen Umgreifen von sehr unterschiedlich geformten Stückgütern führt, kann stets eine recht große Kontaktfläche zwischen der Fingereinheit und den Stückgütern geschaffen werden, so dass der flächenspezifische Anpressdruck bzw. die Flächenpressung gering gehalten werden kann, um die Stückgüter beim Handling nicht zu beschädigen. Alternativ oder zusätzlich kann ein Formschluss in wenigstens eine Richtung erreicht werden, die das Fördern der Stückgüter vom Stapel und/oder vom Haufen erleichtert. In beiden Fällen muss nicht jeweils eine gezielte Adaption an die zu fördernden Stückgüter erfolgen. Letztlich wird das entsprechende Handling der Stückgüter beispielsweise zuverlässiger, beschädigungsärmer und genauer.

Bei einer ersten besonders bevorzugten Ausgestaltung des Verfahrens nach Anspruch 1, werden die zuvor beschriebenen Verfahrensschritte mehrfach oder gar vielfach nacheinander ausgeführt, wodurch der Stapel und/oder der Haufen beispielsweise durch wiederholtes Entfernen von Stückgütern nach und nach abgetragen werden kann. Nach dem Bewegen des wenigstens einen wenigstens abschnittsweise umgriffenen Stückguts vom Stapel und/oder Haufen wird die Fingereinheit beispielsweise erneut gegen wenigstens ein weiteres Stückgut des Stapels und/oder Haufens gedrückt, wodurch das wenigstens eine weitere Stückgut wenigstens abschnittsweise vom Fingerelement umgriffen wird. Anschließend wird auch das wenigstens eine weitere Stückgut von der Fingereinheit in Transportrichtung vom Stapel und/oder Haufen bewegt. So kann durch eine gleichartige Reihenfolge gleichartiger Verfahrensschritte der Stapel und/oder Haufen wenigstens zu einem Großteil abgetragen werden.
Das Entfernen des wenigstens einen von der Fingereinheit umgriffenen Stückguts kann wenigstens teilweise durch eine Bewegung der Fingereinheit in die Transportrichtung vom Stapel und/oder Haufen erfolgen. Dies ist insbesondere dann zweckmäßig, wenn zwischen der Fingereinheit und dem wenigstens einen umgriffenen Stückgut in der Transportrichtung ein Formschluss besteht. Das Handling der Stückgüter ist somit einfach und zuverlässig möglich. Dabei kann das Entfernen des wenigstens einen Stückguts vom Stapel und/oder Haufen wenigstens teilweise auch auf einem anderen Prinzip beruhen.

Beispielsweise kann das wenigstens eine wenigstens abschnittsweise umgriffene Stückgut wenigstens teilweise durch eine Bewegung eines zwischen der Fingereinheit und dem wenigstens einen abschnittsweise umgriffenen Stückgut vorgesehenen Förderbands in der Transportrichtung vom Stapel und/oder Haufen bewegt werden. Dabei wird durch das Drücken der Fingereinheit gegen das wenigstens eine Stückgut des Stapels und/oder Haufens von Stückgütern ein Reibschluss erzeugt. Gleichzeitig wird durch das autoadaptive Umgreifen des wenigstens einen Stückguts durch die Fingereinheit eine große Verbindungsfläche zwischen dem Förderband, das sich wenigstens teilweise entlang des Fingerelements erstreckt oder gar um das Fingerelement umläuft, und dem wenigstens einen Stückgut bereitgestellt. Beides begünstigt den Transport des wenigstens einen Stückguts durch eine Bewegung des Förderbands zwischen der Fingereinrichtung und dem wenigstens einen Stückgut in Transportrichtung. Der Transport von Stückgütern mit Hilfe eines Förderbands ist konstruktiv einfach zu bewerkstelligen und zuverlässig einzusetzen.

Besonders bevorzugt ist es dabei, wenn zum Entfernen des wenigstens einen Stückguts wenigstens eine Bandfördereinrichtung nach einem der Ansprüche 12 bis 15 verwendet wird. Diese kann dann die wenigstens eine Fingereinheit und das wenigstens teilweise entlang der Fingereinheit laufende Förderband umfassen. Hinsichtlich der entsprechenden Merkmale und der daraus erzielten Vorteile wird zur Vermeidung einer unnötigen Wiederholung und der besseren Verständlichkeit halber auf die nachfolgende eingehende Diskussion der entsprechenden Merkmale verwiesen.

Alternativ oder zusätzlich zu den beschriebenen Prinzipen kann das wenigstens eine wenigstens abschnittsweise umgriffene Stückgut auch wenigstens teilweise durch eine Bewegung eines zwischen der Fingereinheit und dem wenigstens einen abschnittsweise umgriffenen Stückgut vorgesehenen anderen Transportmittels in der Transportrichtung vom Stapel und/oder Haufen bewegt werden. Dabei kommen als Transportmittel insbesondere Rollen in Frage, die über einen entsprechenden Antrieb angetrieben werden können. Es können aber auch entsprechend steife und stabile Härchen, etwa an dem wenigstens einen Flankenelement, vorgesehen sein, die in ihrer Ausrichtung zum Flankenelement verstellbar sind, beispielsweise mittels eines Piezoeffekts.

Die wenigstens eine Fingereinheit kann nicht nur für ein autoadaptives teilweises Umgreifen von Stückgütern, sondern auch für ein automatisches Freigeben der Stückgüter nach dem Bewegen der Stückgüter vom Stapel und/oder Haufen sorgen. Anders ausgedrückt kann sich das wenigstens eine von der Fingereinheit wenigstens abschnittsweise umgriffene Stückgut nach dem Bewegen vom Stapel und/oder Haufen unter einer Verstellung der Fingereinheit aus einer gekrümmten Stellung in eine gestreckte Stellung in Schwerkraftrichtung von der Fingereinheit lösen. Mit anderen Worten kann sich die Fingereinheit, nachdem das wenigstens eine Stückgut vom Stapel und/oder Haufen entfernt worden ist, aus einer gekrümmten Stellung in eine weniger gekrümmte bzw. gestreckte Stellung verstellen und das wenigstens eine Stückgut freigeben. Steht für das wenigstens eine Stückgut kein Widerlager mehr zur Verfügung, wird die Fingereinheit durch das Stückgut nicht mehr partiell eingedrückt. Ohne ein partielles Eindrücken der Fingereinheit krümmt sich die Fingereinheit nicht mehr oder jedenfalls weniger in Richtung des Stückguts, welches mithin freigegeben wird.

Für ein geeignetes Handling von Stückgütern bietet es sich an, wenn die Fingereinheit zunächst, also bevor die Fingereinheit insbesondere von oben, gegen den Stapel und/oder Haufen von Stückgütern drückt, über wenigstens Teile des Stapels und/oder Haufens von Stückgütern bewegt wird. Dann kann wenigstens ein oben auf dem Stapel und/oder dem Haufen aufliegendes Stückgut in Anlage an die Fingereinrichtung gebracht werden. Dabei bietet es sich besonders an, und zwar insbesondere wenn nacheinander mehrere Stückgüter von dem Stapel und/oder Haufen entfernt werden sollen, wenn die Fingereinheit vor der Anlage an wenigstens ein Stückgut in einer Annäherungsrichtung wenigstens teilweise entgegengesetzt zur Transportrichtung über den Stapel und/oder Haufen bewegt wird. Wenn die Fingereinrichtung über eine weite Wegstrecke in der Annäherungsrichtung bewegt werden kann, können auch sehr breite bzw. sehr tiefe Stapel und/oder Haufen abgetragen werden. Dies ist insbesondere beim Entladen von Stückgütern aus einem Lastkraftwagen, Anhänger, Sattelauflieger und/oder Container von Vorteil, da diese oft einen sehr langen Laderaum aufweisen.

Alternativ oder zusätzlich kann das Handling der Stückgüter verbessert werden, wenn eine Bandfördereinrichtung seitlich neben dem Stapel und/oder Haufen positioniert wird. Dies kann derart erfolgen, dass das wenigstens eine von der Fingereinheit in Transportrichtung vom Stapel und/oder Haufen bewegte Stückgut auf ein Förderband der Bandfördereinrichtung fällt, rutscht und/oder bewegt wird. Das wenigstens eine Stückgut wird also von der Bandfördereinrichtung aufgefangen und auf dem Förderband der Bandfördereinrichtung vom Stapel und/oder Haufen weg transportiert. Dadurch kann das Abtragen eines Stapels und/oder Haufens von Stückgütern einfach, zügig und zuverlässig durchgeführt werden.

Dabei kann es besonders zweckmäßig sein, wenn als seitlich neben dem Stapel und/oder dem Haufen zu positionierende Bandfördereinrichtung ein Teleskopbandförderer und/oder eine Bandfördereinrichtung nach einem der Ansprüche 12 bis 15 verwendet wird. Durch die Teleskopierbarkeit kann die Bandfördereinrichtung einfach nachgeführt werden, wenn der Stapel und/oder der Haufen von Stückgütern nach und nach abgetragen wird. Vor diesem Hintergrund kann der Begriff seitlich auch als gesehen von der Bandfördereinrichtung vor dem Stapel und/oder dem Haufen angesehen werden. Wird eine Bandfördereinrichtung nach einem der Ansprüche 12 bis 15 verwendet, kann erneut die autoadaptive Eigenschaft der Fingereinheit ausgenutzt werden. Wenn ein Stückgut auf dem Förderband und das Förderband wenigstens partiell auf der Fingereinheit aufliegt, passt sich die Form der Fingereinheit bedarfsweise an die Form des Stückguts an, was die Auflagefläche auf dem Förderband vergrößern und den Transport entlang der Bandfördereinrichtung verbessern kann. Alternativ oder zusätzlich kann der Finger der Bandfördereinrichtung aber auch vorgekrümmt werden, etwa um die Fallhöhe der Stückgüter zu verringern und/oder eine Anpassung der Bandfördereinrichtung an die beim Abtragen des Stapels und/oder des Haufens abnehmende Höhe des Stapels und/oder des Haufens zu ermöglichen. Hinsichtlich der entsprechenden Merkmale und der daraus erzielten Vorteile wird zur Vermeidung einer unnötigen Wiederholung und der besseren Verständlichkeit halber auf die nachfolgende eingehende Diskussion der entsprechenden Merkmale verwiesen.

Um die vom Stapel und/oder Haufen entfernten Stückgüter beschädigungsfrei und zuverlässig aufnehmen zu können, kann die Bandfördereinrichtung mit abnehmender Höhe des an die Bandfördereinrichtung angrenzenden Bereichs des Stapels und/oder Haufens zunehmend weiter nach unten verstellt werden. Dies muss nicht kontinuierlich, sondern kann auch stufenweise erfolgen. So ist beispielsweise zunächst die Bandfördereinrichtung hoch genug positioniert, dass die Stückgüter nicht zu tief fallen, bevor sie von der Bandfördereinrichtung aufgenommen werden. Später ist die Bandfördereinrichtung tief genug eingestellt, so dass die Stückgüter noch problemlos vom verbliebenen Stapel und/oder Haufen nach unten auf die Bandfördereinrichtung bewegt werden können.

Zur Steuerung der Fingereinheit beim Handling der Stückgüter bietet es sich an, dass die Lage und/oder die Kontur des Stapels und/oder des Haufens von Packstücken wenigstens teilweise von wenigstens einem Sensor erfasst wird. So kann die Fingereinheit gezielt zu den auf dem Stapel und/oder Haufen befindlichen Stückgütern bewegt werden, um sie von dem Stapel und/oder Haufen zu entfernen. Einfach und genau ist die Erfassung des Stapels und/oder Haufens möglich, wenn ein optischer Sensor, insbesondere eine Kamera, verwendet wird. Die Bewegung der Fingereinheit kann dann wenigstens teilweise in Abhängigkeit der von dem Sensor erfassten Lage und/oder Kontur des Stapels und/oder des Haufens von Stückgütern gesteuert werden. So können Stückgüter problemlos von unterschiedlich ausgebildeten Stapeln und/oder Haufen entfernt werden, ohne dass jeweils eine spezielle händische Anpassung des Verfahrens erfolgen muss. Dies erhöht die Flexibilität und die Effizienz des Verfahrens.

Einfach und genau kann wenigstens ein Teil der Lage und/oder der Kontur des Stapels und/oder des Haufens beispielsweise mittels Triangulation ermittelt werden. Dabei ist die Triangulation eine geometrische Methode der optischen Abstandsmessung durch genaue Winkelmessung innerhalb von Dreiecken. Die Berechnung erfolgt mittels trigonometrischer Funktionen. Die Triangulation erfordert zudem wenigstens zwei Sensoren zur genauen Abstandsmessung und Richtungsbestimmung von einzelnen Punkten des Stapels und/oder Haufens ausgehend von den Sensoren.

Um eine Beschädigung von insbesondere empfindlichen Stückgütern zu vermeiden, kann eine Fingereinheit mit wenigstens einem Drucksensor, vorzugsweise an wenigstens einem Flankenelement, verwendet werden. Der Drucksensor meldet dann beispielsweise den gemessenen Druck an eine Steuereinheit, die die Fingereinheit daraufhin so steuert, dass ein vorgegebener Maximaldruck nicht überschritten wird. Alternativ oder zusätzlich kann mittels des wenigstens einen Drucksensors die Fingereinheit aber auch so gesteuert werden, dass ein ausreichender Druck von der Fingereinheit auf das wenigstens eine Stückgut aufgebracht wird, um das wenigstens eine Stückgut sicher und zuverlässig vom Stapel und/oder Haufen entfernen zu können.

Das Verfahren ist nicht auf die Verwendung von einer Fingereinheit beschränkt. Es können vielmehr mehrere Fingereinheiten gleichzeitig und/oder nacheinander verwendet werden. Um das Verfahren zu vereinfachen und auch große, insbesondere breite Stapel und/oder Haufen von Stückgütern abtragen zu können, kann eine Mehrzahl von Fingerelementen verwendet werden. Die Fingereinheiten können dann über die Breite des Stapels und/oder des Haufens unterschiedliche Stückgüter wenigstens teilweise umgreifen und von dem Stapel und/oder dem Haufen bewegen. Auf diese Weise können beispielsweise Lastkraftwagen, Anhänger, Sattelauflieger und Container zügig entladen werden. Dabei bietet es sich der Einfachheit halber an, wenn die Fingerelemente nebeneinander angeordnet sind. So können einfach über die Breite des Stapels und/oder Haufens verteilte Stückgüter ergriffen werden. Besonders zweckmäßig ist es, wenn die Fingerelemente zu einer gemeinsamen Handeinheit zusammengefasst sind. So können durch die Bewegung der Handeinheit die Fingereinheiten gemeinsam bewegt werden, was den Steuerungsaufwand verringert. Alternativ oder zusätzlich ist es zudem zweckmäßig, wenn die Mehrzahl von Fingerelementen gleichzeitig und parallel zueinander in der Annäherungsrichtung, Greifrichtung und/oder Transportrichtung bewegt werden. Dies vereinfacht die Durchführung des Verfahrens und die Steuerung der Finger. Dies gilt umso mehr je mehr diese Bewegungen gemeinsam durchgeführt werden.

Alternativ oder zusätzlich kann vorgesehen sein, dass die Mehrzahl von Fingern sich im Wesentlichen über die gesamte Breite des Stapels und/oder Haufens und/oder über die gesamte Breite eines den Stapel und/oder Haufen aufweisenden Laderaums, insbesondere eines Lastkraftwagens, Sattelaufliegers, Anhängers, Containers, Transportbehälters, Wechselbehälters und/oder Rollbehälters, verteilen. Dies bietet den Vorteil, dass der Stapel und/oder der Haufen gleichzeitig über seine gesamte Breite abgetragen werden kann.

Bei einer ersten besonders bevorzugten Ausgestaltung des Verfahrens nach Anspruch 9, werden die auf dem Stapel und/oder Haufen liegenden Stückgüter durch ein Verfahren nach einem der Ansprüche 1 bis 8 vom Stapel und/oder Haufen auf das Förderbad der Bandfördereinrichtung bewegt. Somit wird die autoadaptive Eigenschaft der Fingereinheit sowohl beim Transport der Stückgüter vom Stapel und/oder Haufen auf die Bandfördereinrichtung als auch bei der Aufnahme und dem Transport der Stückgüter durch die Bandfördereinrichtung ausgenutzt. Durch die Verwendung des Verfahrens nach einem der Ansprüche 1 bis 8 werden grundsätzlich in gleicher Weise die in diesem Zusammenhang bereits diskutierten Vorteile erzielt. Alternativ oder zusätzlich bietet sich die Verwendung einer Bandfördereinrichtung nach einem der Ansprüche 12 bis 15 an, sei es zum Transport der Stückgüter vom Stapel und/oder dem Haufen auf die seitlich neben dem Stapel und/oder Haufen vorgesehene Bandfördereinrichtung oder als seitlich neben dem Stapel und/oder Haufen von Stückgütern positionierte Bandfördereinrichtung selbst. Auch in diesem Fall werden grundsätzlich die im Zusammenhang mit dem Ansprüchen 12 bis 15 diskutierten Vorteile erreicht, auf die zur Vermeidung einer unnötigen Wiederholung und der besseren Verständlichkeit halber an dieser Stelle verwiesen wird.

Wenn das freie Ende der Bandfördereinrichtung mit abnehmender Höhe des an die Bandfördereinrichtung angrenzenden Bereichs des Stapels und/oder Haufens zunehmend nach unten verstellt wird, kann erreicht werden, dass die Stückgüter zunächst nicht zu tief vom Stapel und/oder Haufen auf die Bandfördereinrichtung fallen, um eine Beschädigung der Stückgüter zu vermeiden. Zudem kann aber erreicht werden, dass Stückgüter auch dann noch problemlos nach unten auf die Bandfördereinrichtung gelangen, wenn der Stapel angrenzend zu der Bandfördereinrichtung schon weitgehend abgetragen ist. Dabei ist keine kontinuierliche Verstellung der Bandfördereinrichtung erforderlich. Es reicht vielmehr eine stufenweise Verstellung der Bandfördereinrichtung aus.

Besonders einfach und genau kann die Bandfördereinrichtung verstellt werden, indem die Fingereinheit über eine Antriebseinheit verstellt wird. Dabei können die wenigstens zwei Flankenelemente in einer Längsrichtung der Fingereinheit gegeneinander verstellt werden. Dies führt dann dazu, dass die Fingereinheit der Bandfördereinrichtung zwischen wenigstens einer gekrümmten und einer gestreckten Stellung und bedarfsweise wieder zurück verstellt wird.

Wenn die Stückgüter schwer genug sind und die Fingereinheit flexibel genug eingestellt ist, kann wenigstens ein von dem Förderband gefördertes Stückgut die Fingereinheit, insbesondere wenigstens ein Flankenelement, lokal so eindrücken, so dass die Fingereinheit, insbesondere die wenigstens eine Flankeneinheit, neben dem Stückgut nach oben, insbesondere in Richtung des Stückguts, ausgelenkt wird. Dadurch kann ein teilweises Umgreifen des Stückguts erreicht werden. Es kann so grundsätzlich die Aufstandsfläche des Stückguts auf dem Förderband vergrößert werden. Alternativ oder zusätzlich kann auch eine zuverlässigere Förderung des Stückguts auf dem Förderband erreicht werden.

Dabei kann die Flexibilität der Fingereinrichtung grundsätzlich durch eine Verringerung der Anzahl an Stegen bezogen auf die Längenerstreckung des Fingerelements verringert werden. Zur Steigerung der Stabilität kann es dagegen zweckmäßig sein, die Anzahl an Stegen pro Längeneinheit des Fingerelements zu erhöhen.

Bei dem Bandförderer gemäß Anspruch 12 ist in einer ersten besonders bevorzugten Ausgestaltung vorgesehen, dass die wenigstens zwei Flankenelemente und die Mehrzahl von Stegen derart miteinander verbunden und ausgebildet sind, so dass ein Eindrücken wenigstens eines Flankenelements in einer Eindrückrichtung schräg, insbesondere senkrecht, zur Längserstreckung des Flankenelements in einer Auslenkung des Flankenelements außerhalb des eingedrückten Bereichs in einer Richtung entgegengesetzt zur Eindrückrichtung resultiert. Dieses Verhalten der Fingereinheit, das sich durch die Ausrichtung der Flankenelemente zueinander und die Ausrichtung der Stege zu den Flankenelementen erreichen und einstellen lässt, erlaubt ein autoadaptives Anpassen des Fingerelements an die Form der Stückgüter und damit eine Anpassung der Bandfördereinrichtung auch an sehr unterschiedliche Stückgüter. So wird die Anlagefläche zwischen dem Förderband und dem Stückgut vergrößert und das Stück zuverlässiger vom Förderband aufgenommen und gestützt. Dies resultiert letztlich in einem im Wesentlichen störungsfreien Betrieb der Bandfördereinrichtung.

Um ein geeignetes Verstellen der Fingereinheit durch ein lokales Eindrücken der Fingereinheit zu gewährleisten und eine Verstellung in Richtung der Ausgangsstellung einfach zu ermöglichen, bietet es sich insbesondere an, dass die Verstellung der Flankenelemente aus der wenigstens einen gestreckten Stellung in die wenigstens eine gekrümmte Stellung gegen eine Rückstellkraft, insbesondere der Flankenelemente, erfolgt. Über die geeignete Wahl der Rückstellkraft kann die Verformung der Fingereinheit in gewünschter Weise beeinflusst werden. Je geringer die Rückstellkraft desto flexibler ist grundsätzlich die Fingereinheit und umgekehrt. Besonders bevorzugt ist es zudem, wenn die Verstellung der Flankenelemente aus der wenigstens einen gekrümmten Stellung in die wenigstens eine gestreckte Stellung, insbesondere ausschließlich, durch die Rückstellkraft bewirkt wird. Das Fingerelement hat dann die Tendenz, sich bei Wegfall der Last immer wieder von selbst in Richtung einer Ausgangsstellung zurückzuverstellen. Die Rückstellkraft kann auch wenigstens teilweise durch wenigstens ein zusätzliches Federelement bereitgestellt werden. Dies ist insbesondere für den Fall zweckmäßig, dass das entsprechende Flankenelement als Gliederkette mit beweglich verbundenen, bedarfsweise steifen, Kettengliedern ausgebildet ist.

Um die erforderliche Flexibilität des Fingerelements bereitzustellen und das wenigstens teilweise Umgreifen des wenigstens einen Stückguts zu gewährleisten bietet es sich an, wenn die Mehrzahl von Stegen und die wenigstens zwei Flankenelemente jeweils einen spitzen Winkel, vorzugsweise zwischen 5° und 85°, und einen stumpfen Winkel, vorzugsweise zwischen 95° und 175°, bilden. Rechte Winkel können dagegen weniger bevorzugt sein, da dann ein autoadaptives Verstellen des wenigstens einen Flankenelements behindert sein kann.

Damit durch die Verstellung der Fingereinheit auf das in Anlage mit dem wenigsten einen Stückgut befindliche Förderband einwirken zu können, bietet es sich an, wenn das Förderband entlang wenigstens eines Flankenelements der Fingereinheit geführt wird. Noch günstiger ist es zu diesem Zweck, wenn das Förderband wenigstens abschnittsweise von dem entsprechenden Flankenelement gestützt wird.

Alternativ oder zusätzlich kann das Förderband so entlang des Flankenelements geführt werden, dass das Förderband unter Last gegen das Flankenelement drücken kann. So lässt sich die Fingereinheit als Wechselwirkung autoadaptiv in eine gekrümmte Stellung verstellen. In dieser gekrümmten Stellung kann dann die Fingereinheit und/oder das Förderband das wenigstens eine Stückgut wenigstens teilweise umgreifen.

Die Bandfördereinrichtung lässt sich besonders zweckmäßig einsetzen, wenn wenigstens ein Ende der wenigstens einen Fingereinheit eine Umlenkung, insbesondere Umlenkrolle, zum Umlenken des Förderbands aufweist. Das entsprechende Ende der Fingereinheit kann dabei besonders bevorzugt einem freien Ende der Bandfördereinrichtung zugeordnet sein. Durch die Umlenkung kann das Förderband über die Fingereinheit leicht nach oben oder nach unten verstellt werden. Dies gilt auch für das freie Ende der Bandfördereinrichtung, wenn das entsprechende Ende der Fingereinheit am freien Ende der Bandfördereinrichtung vorgesehen ist. Etwa vor diesem Hintergrund bietet es sich also an, wenn die Fingereinheit an einem freien Ende des Bandförderers vorgesehen ist.

Ein Ende der Fingereinheit kann besonders zweckmäßig verstellt werden, wenn die wenigstens zwei Flankenelemente an dem entsprechenden Ende der wenigstens einen Fingereinheit direkt miteinander verbunden sind. Die Verbindung miteinander erfolgt dabei ohne einen zwischen den Flankenelementen vorgesehenen Steg. Besonders bevorzugt ist es dabei zur Verstellung der Spitze der Fingereinheit, wenn die wenigstens zwei Flankenelemente mit ihren freien Enden miteinander verbunden sind.

Um die Fingereinheit auch ohne eine entsprechende Einwirkung eines Stückguts krümmen zu können, kann wenigstens eine Antriebseinheit zum Verstellen der wenigstens zwei Flankenelemente in einer Längsrichtung der Fingereinheit gegeneinander vorgesehen sein. Durch das Verstellen der wenigstens zwei Flankenelemente gegeneinander in Längsrichtung des Fingerelements kann das Fingerelement von wenigstens einer gestreckten Stellung in eine gekrümmte Stellung und zurück verstellt werden. Auf diese Weise lässt sich letztlich eine wenigstens abschnittsweise Krümmung der Bandfördereinrichtung über die Fingereinheit vorgeben.

Nachfolgend wird die Erfindung anhand einer lediglich Ausführungsbeispiele der Erfindung darstellenden Zeichnung näher erläutert. In der Zeichnung zeigt
- Fig. 1: eine Fingereinheit einer erfindungsgemäßen Bandfördereinrichtung und/oder zur Durchführung der erfindungsgemäßen Verfahren in Seitenansicht,
- Fig. 2A-C: das Funktionsprinzip der Fingereinheit aus Fig. 1 beim Verstellen von Flankenelementen gegeneinander,
- Fig. 3: das Funktionsprinzip der Fingereinheit aus Fig. 1 beim autoadaptiven Verstellen einer Flanken,
- Fig. 4: eine erfindungsgemäße Bandfördereinrichtung in einer schematischen Seitenansicht,
- Fig. 5: das autoadaptive Anpassen der Fingereinheit an ein Stückgut gemäß eines erfindungsgemäßen Verfahrens in einer schematischen Seitenansicht,
- Fig. 6: das Funktionsprinzip eines ersten erfindungsgemäßen Verfahrens in schematischer Darstellung,
- Fig. 7: das Funktionsprinzip eines zweiten erfindungsgemäßen Verfahrens in schematischer Darstellung und
- Fig. 8A-C: das Funktionsprinzip eines dritten erfindungsgemäßen Verfahrens in schematischer Darstellung.

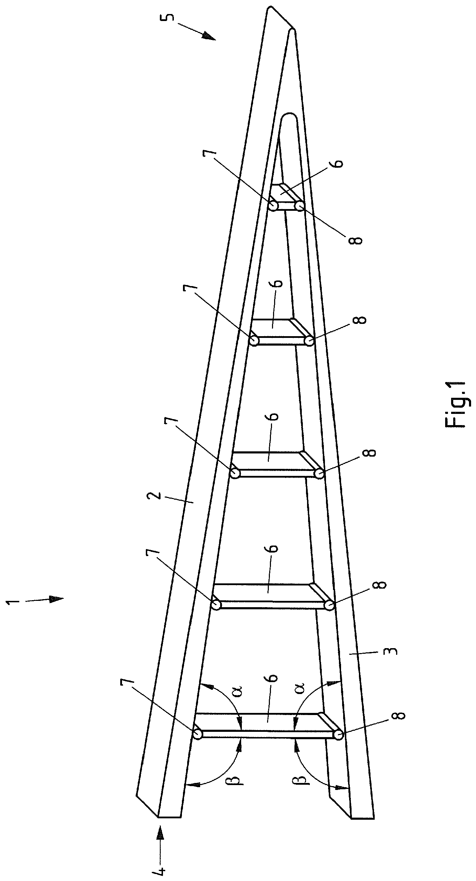

In der Fig. 1 ist eine Fingereinheit 1 dargestellt, die ein autoadaptives Verformen ermöglicht. Die Fingereinheit 1 weist zwei Flankenelemente 2,3 auf, die bei der dargestellten und insoweit bevorzugten Fingereinheit 1 gemeinsam von einem Ende 4 der Fingereinheit 1 zum gegenüberliegenden Ende 5 der Fingereinheit 1 verlaufen. Zudem nähern sich die Flankenelemente 2,3 in einer Längsrichtung der Fingereinheit 1, kontinuierlich einander an. Während die Flankenelemente 2,3 an einem Ende 4 der Fingereinheit 1 voneinander beabstandet sind, sind die Flankenelemente 2,3 am anderen Ende 5 der Fingereinheit 1 direkt miteinander verbunden. Daher wird eine sich in eine Richtung verjüngende, konisch zulaufende Fingereinheit 1 erhalten.

Zwischen den Flankenelementen 2,3 sind über die Länge der Fingereinheit 1 verteilt Stege 6 vorgesehen, über die die Flankenelemente 2,3 miteinander verbunden sind. Bei der dargestellten und insoweit bevorzugten Fingereinheit 1 sind die Stege 6 an beiden gegenüberliegenden Enden 7,8 über Gelenke gelenkig mit den Flankenelementen 2,3 verbunden. Alternativ könnten die Stege 6 flexibel ausgebildet sein. Die Stege 6 sind bei der dargestellten uns insoweit bevorzugten Fingereinheit 1 in gleichmäßigen Abständen über die Länge der Fingereinheit 1 verteilt. Dies ist jedoch nicht zwingend erforderlich. Auch ist es nicht zwingend erforderlich, dass die Stege 6 wie bei der dargestellten Fingereinheit 1 parallel zueinander verlaufen. Bevorzugt ist es jedoch, dass die Stege 6 mit jedem der Flankenelemente 2,3 auf einer Seite einen spitzen Winkel α und auf der gegenüberliegenden Seite einen stumpfen Winkel β bilden.

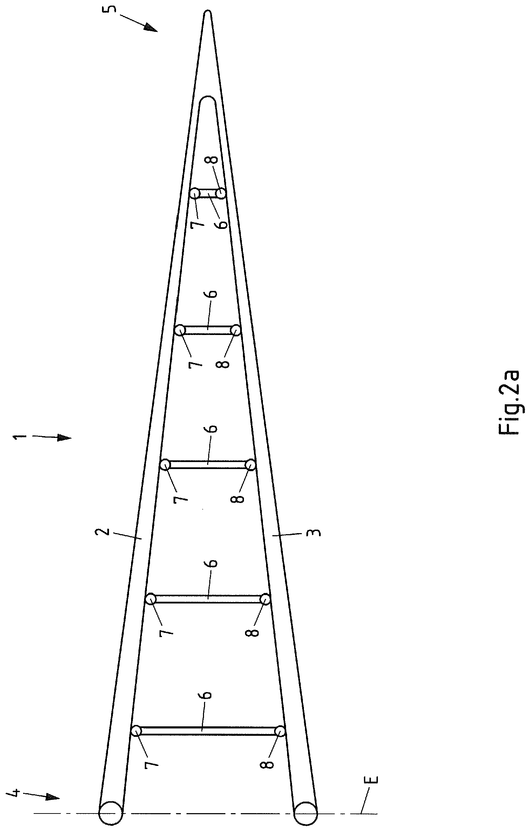

Die dargestellten und insoweit bevorzugten Flankenelemente 2,3 sind flexibel ausgebildet, so dass sich die Flankenelemente 2,3 um eine Achse senkrecht zur Längserstreckung der Fingereinheit 1 biegen lassen, was insbesondere in den Fig. 2A-C dargestellt ist. Zu diesem Zweck ist es zweckmäßig, wenn die Flankenelemente 2,3 aus einem flexiblen Kunststoff oder beispielsweise Gummi gebildet sind. Die Stege 6 können ebenfalls aus Kunststoff oder beispielsweise aus einem Metall gebildet sein, da die Stege 6 keine Flexibilität aufweisen müssen. In der Fig. 2A ist die Fingereinheit 1 aus Fig. 1 in einer Ausgangsstellung dargestellt, bei der die Fingereinheit 1 in einer gestreckten Ausrichtung vorliegt, wobei die freien Enden der Flankenelemente 2,3 in einer Ebene E angeordnet sind. Bei der dargestellten und insoweit bevorzugten Fingereinheit 1 sind die Flankenelemente 2,3 in dieser Stellung wenigstens im Wesentlichen symmetrisch zueinander ausgebildet.

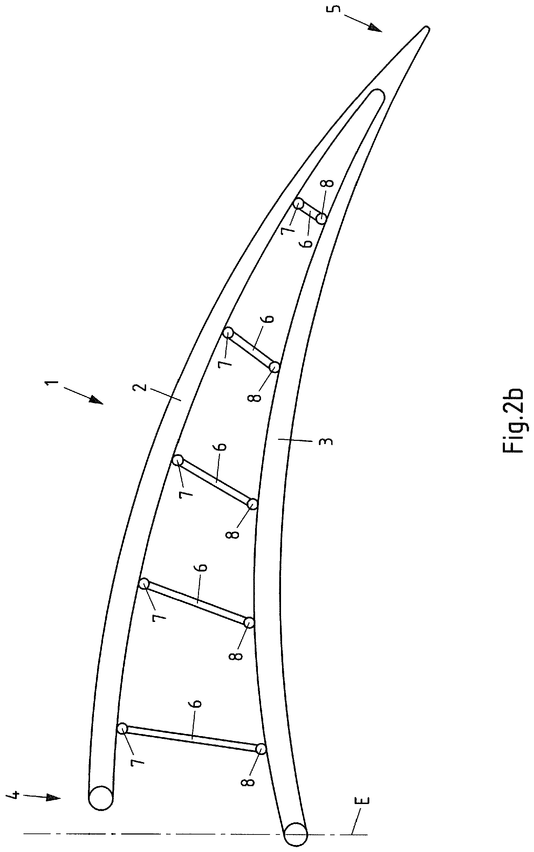

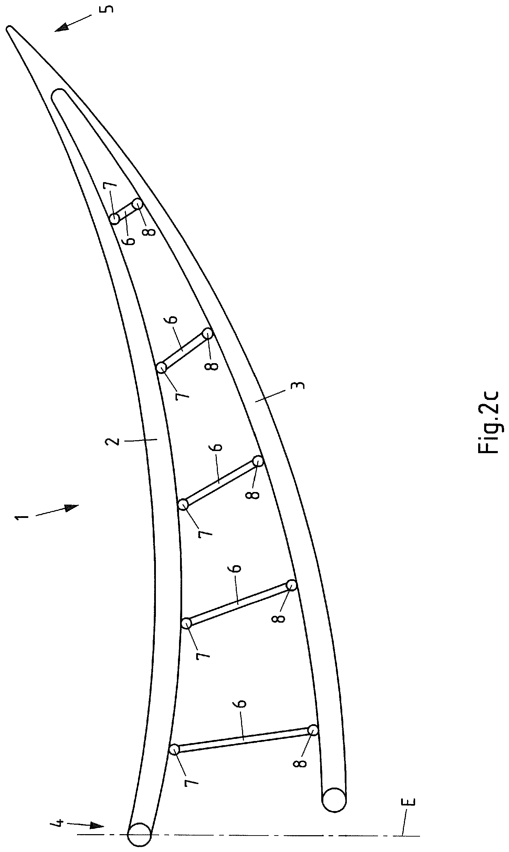

Wenn nun gemäß Fig. 2B gegenüber der Ausgangsstellung das freie Ende des oberen Flankenelements 2 aus der dargestellten Ebene E in Längsrichtung der Fingereinheit 1 nach vorne verschoben wird, krümmt sich die Fingereinheit 1 infolge der Verbindung der Flankenelemente 2,3 über die Mehrzahl von Stegen 6 nach unten. Es wird auf diese Weise das rechts dargestellte Ende 5 der Fingereinheit 1 nach unten verstellt. Analog krümmt sich die Fingereinheit 1 gemäß Fig. 2C nach oben, wobei das entsprechende Ende 5 der Fingereinheit 1 nach oben verstellt wird, wenn das freie Ende des unteren Flankenelements 3 in Längsrichtung der Fingereinheit 1 aus der Ebene E nach vorne in Richtung der sich krümmenden Spitze der Fingereinheit 1 verschoben wird. Den Fig. 2A-C kann ferner entnommen werden, dass die Streben 6 zwischen den Flankenelementen 2,3 sich beim Krümmen der Fingereinheit 1 in entgegengesetzte Richtungen in unterschiedliche Richtungen neigen.

Um das Verschieben der Flankenelemente 2,3 analog zu den Fig. 2A-C zu bewerkstelligen, kann eine nicht dargestellte Antriebseinheit vorgesehen sein. Dabei sind geeignete Antriebseinheiten aus dem Stand der Technik bekannt. Geeignete Antriebseinheiten können beispielsweise wenigstens einen Linearantrieb aufweisen. So kann wenigstens ein Flankenelement 2,3 problemlos in Längsrichtung der Fingereinheit 1 vor und zurück verstellt werden.

Nicht dargestellt ist, dass auch mehr als zwei, beispielweise wenigstens drei oder vier, Flankenelemente vorgesehen sein können. Der Einfachheit halber sind diese dann, insbesondere gleichmäßig, verteilt um eine Längsachse der Fingereinheit angeordnet. Die mehreren Flankenelemente können dann, insbesondere mit freien Enden, in einer gemeinsamen Spitze der Fingereinheit zusammenlaufen. Zudem oder alternativ können die Stege vorzugsweise jeweils alle Flankenelemente miteinander verbinden. Die dargestellten und insoweit bevorzugten Flankenelemente 2,3 sind streifenförmig ausgebildet. Es wäre aber auch eine plattenförmige oder stabförmige Ausgestaltung der Flankenelemente möglich.

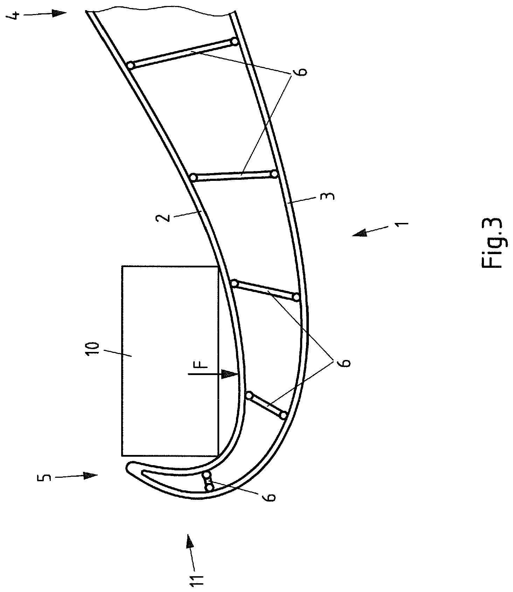

Die beschriebene Fingereinheit 1 kann aber noch anders als in den Fig. 2A-C dargestellt verstellt werden, und zwar gemäß Fig. 3, die ein autoadaptives Verstellen eines Flankenelements 2,3 der Fingereinheit 1 zeigt, während ein Stückgut 10 das entsprechende Flankenelement 2 nach innen bezogen auf die Fingereinheit 1 drückt. Dabei ist es grundsätzlich nicht von Bedeutung, ob das Stückgut 10 gegen die Fingereinheit 1 oder die Fingereinheit 1 gegen das Stückgut 10 drückt. Jedenfalls wird das entsprechende Flankenelement 2 lokal in Richtung der Druckkraft F nach innen bezogen auf die Fingereinheit 1 verschoben, was infolge der Kopplung der Flankenelemente 2,3 über die Stege 6 dazu führt, dass das Flankenelement 2 an einer anderen Stelle, und zwar in Richtung der beiden miteinander verbundenen Enden 11 der Flankenelemente 1 an dem links dargestellten Ende 5 der Fingereinheit 5, in Richtung des Stückguts 10 gekrümmt wird, d.h. gegen die Druckkraft F nach außen bezogen auf die Fingereinheit 1 bzw. vorliegend nach oben verstellt wird. Dadurch wird das Stückgut 10 von der Fingereinheit 1 teilweise umgriffen.

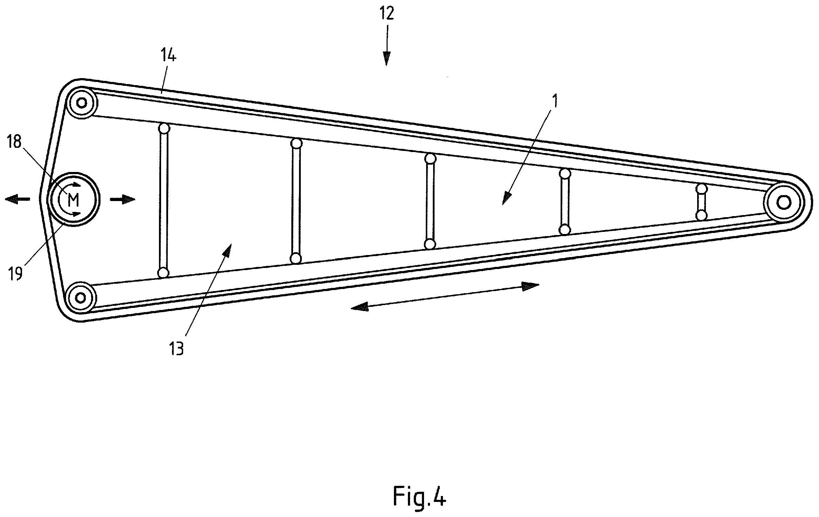

In der Fig. 4 ist eine Bandfördereinrichtung 12 dargestellt, bei der die Tragkonstruktion 13 der Bandfördereinrichtung 12 aus einer Fingereinheit 1 gemäß Fig. 1 besteht. Das Förderband 14 der Bandfördereinrichtung 12 läuft um die Tragkonstruktion 13 und damit um die Fingereinheit 1 herum. Dazu weist die dargestellte und insoweit bevorzugte Bandfördereinrichtung 12 mehrere Umlenkungen in Form von Umlenkrollen 15,16,17 auf. Eine Umlenkrolle 15 ist an den miteinander verbundenen Enden 11 der Flankenelemente 2,3 vorgesehen, wobei die Umlenkrolle 15 letztlich von dem entsprechenden Ende 5 der Fingereinheit 1 getragen und gestützt wird. Ferner ist jeweils eine Umlenkung in Form einer Umlenkrolle 16,17 an den freien Ende der Flankenelemente 2,3 vorgesehen. Des Weiteren ist ein Antrieb 18 vorgesehen, der bei der dargestellten und insoweit bevorzugten Bandfördereinrichtung 14 das Förderband 14 in unterschiedliche Richtungen antreiben kann. Der Antrieb 18 erfolgt über eine Antriebsrolle 19, die bedarfsweise zum Spannen des Förderbands 14 beispielsweise in Längsrichtung der Fingereinheit 1 verstellt werden kann. Zudem kann für einen schlupffreien Antrieb des Förderbands 14 an dem Förderband 14 eine Verzahnung vorgesehen sein, die mit einer Verzahnung der Antriebsrolle 19 kämmt. Anders als bei der dargestellten und insoweit bevorzugten Bandfördereinrichtung 12 kann die Tragkonstruktion 13, um die das Förderband 14 umläuft, neben der Fingereinheit 1 noch weitere Tragstrukturteile aufweisen.

Bei der dargestellten und insoweit bevorzugten Bandfördereinrichtung 12 wird das Förderband 14 entlang der Flankenelemente 2,3 geführt, und zwar so nahe, dass das Förderband 14 bedarfsweise durch ein Stückgut 10 gegen ein Flankenelement 2,3 gedrückt werden kann. Die Fingereinheit 1 kann dabei autoadaptiv in Bezug auf das entsprechende Stückgut 10 verstellt werden, wie dies vom Prinzip im Zusammenhang mit der Fig. 3 beschrieben worden ist. Alternativ oder zusätzlich können bei der Fingereinheit 1 der in der Fig. 4 dargestellten Bandfördereinrichtung 12 die Flankenelemente 2,3 in Längsrichtung der Fingereinheit 1 gegeneinander verschoben werden, wie dies im Prinzip im Zusammenhang mit den Fig. 2A-C beschrieben worden ist. Mit dem dadurch einhergehenden Verstellen eines Endes 5 der Fingereinheit 1 in einer Richtung senkrecht zur Längserstreckung der Fingereinheit 1 wird auch das Förderband 14 und dessen Verlauf um die Fingereinheit 1 herum verstellt. Wenn das Förderband 14 auch bei einer gekrümmten Fingereinheit 1 in geringem Abstand zu den Flankenelementen 2,3 an diesen entlang geführt werden soll, müssen bedarfsweise weitere nicht dargestellte Einrichtungen zum Positionieren des Förderbands 14 zwischen den Umlenkrollen 15,16,17 angrenzend zu den Flankenelementen 2,3 oder wenigstens einem Flankenelement 2,3 vorgesehen werden.

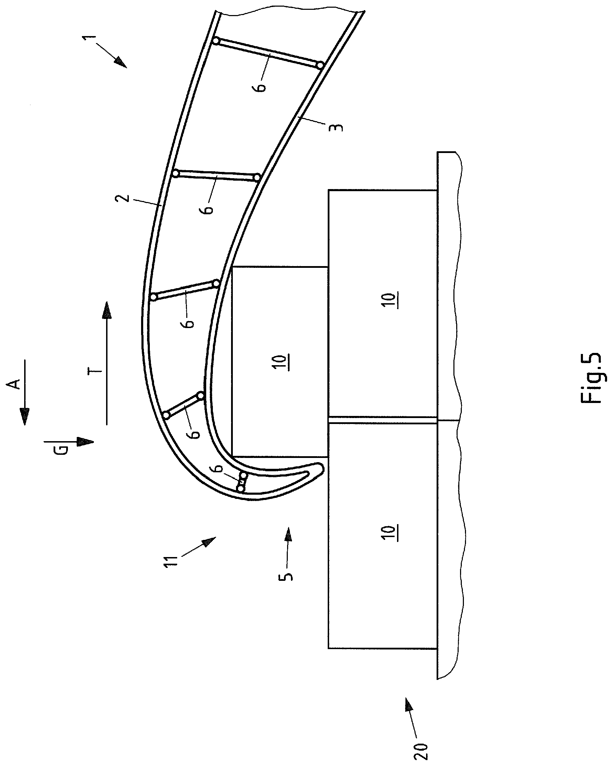

In der Fig. 5 ist eine Verwendung einer Fingereinheit 1 zum Entfernen von auf einem Stapel 20 aus Stückgütern 10 in Form von Packstücken liegenden Stückgütern 10 dargestellt. Dabei ist nur der obere Teil des Stapels 20 dargestellt und ist mit den Pfeilen oberhalb der Fingereinheit 1 eine Bewegungsabfolge dargestellt, die von der Fingereinheit 1 beim dargestellten und insoweit bevorzugten Verfahrensablauf nacheinander durchgeführt wird. Zunächst wird die Fingereinheit 1 in einer Annäherungsrichtung A über dem Stapel 20 zur Rückseite bezogen auf die Fingereinheit 1 des Stapels 20 bewegt, um die Fingereinheit 1 in Überdeckung mit dem Stapel 20 zu bringen. Anschließend wird die Fingereinheit 1 in einer Greifrichtung G auf den Stapel 20 aus Stückgütern 10 abgesenkt, bis die Fingereinheit 1 abschnittsweise gegen das Stückgut 10 drückt. Es kommt dadurch zu der bereits beschriebenen autoadaptiven Verstellung des unteren Flankenelements 3, das mit einer korrespondierenden Verstellung des oberen Flankenelements 2 einhergeht. Dabei krümmt sich das freie Ende 5 der Fingereinheit 1 nach unten und umgreift das unter der Fingereinheit 1 befindliche Stückgut 10 teilweise. Dieses Umgreifen kann auch als ein Hintergreifen des Stückguts 10 angesehen werden. Anschließend wird die Fingereinheit 1 in eine Transportrichtung T bewegt. Beim dargestellten und insoweit bevorzugten Ausführungsbeispiel ist die Transportrichtung T entgegengesetzt zur Annäherungsrichtung A und senkrecht zur Greifrichtung G ausgerichtet. Hiervon kann aber bedarfsweise auch abgewichen werden. Jedoch sollte die Greifrichtung G eine Bewegungskomponente aufweisen, die senkrecht sowohl zur Annäherungsrichtung A als auch zur Transportrichtung T ist. Durch die Bewegung der Fingereinheit 1 in die Transportrichtung T wird das teilweise umgriffene, auf dem Stapel 20 aus Stückgütern 10 liegende Stückgut 10 von dem Stapel 20 bewegt. Bei dem dargestellten Ausführungsbeispiel erfolgt dies in der Transportrichtung T.

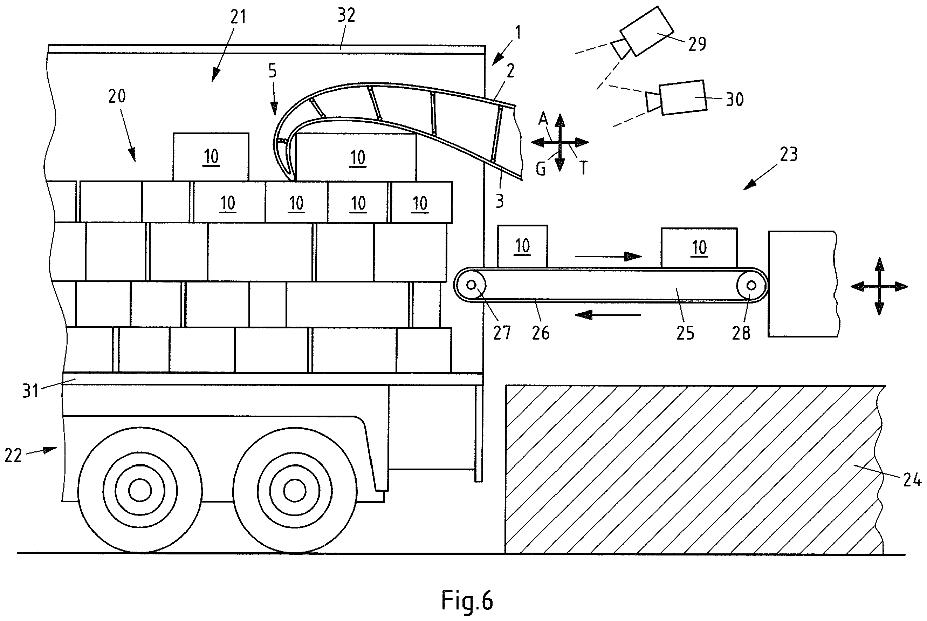

Die Fingereinheit 1 und der Stapel 20 gemäß Fig. 5 sind in der Fig. 6 in einem Laderaum 21 eines Lastkraftwagens, Anhängers oder Sattelaufliegers 22 vorgesehen. Die Fingereinheit 1 ist dabei beweglich gehalten, so dass die Fingereinheit 1 sowohl vor und zurück als auch rauf und runter bewegt werden kann. So kann die Fingereinheit 1 Stückgüter 10 von dem Stapel 20 entfernen und auch einen recht tiefen Stapel 20 aus Stückgütern 10 nach und nach abtragen. Dazu kann seitlich in einem Abstand oder angrenzend zu dem Stapel 20 aus Stückgütern 10 eine Bandfördereinrichtung
23 positioniert werden, um die Stückgüter 10 aufzufangen und abzutransportieren, die von der Fingereinheit 1 vom Stapel 20 entfernt worden sind. Die Bandfördereinrichtung 23 ist dabei beispielsweise auf einer Laderampe 24 positioniert. Zu diesem Zweck kann die Bandfördereinrichtung 23 vor und zurück bewegt werden, insbesondere teleskopierbar ausgebildet sein. So kann die Bandförderanlage 23 nach und nach weiter in den Laderaum 21 hineinbewegt werden, während der Stapel 20 nach und nach abgetragen wird. Die Bandfördereinrichtung 23 umfasst eine Tragkonstruktion 25, um die das Förderband 26 um Umlenkungen in Form von Umlenkrollen 27,28 in der durch die Pfeile veranschaulichten Richtung umläuft. Insbesondere bei einer teleskopierbaren Bandfördereinrichtung 23 können auch mehrere Förderbänder 26 hintereinander zum Transport der Stückgüter 10 vorgesehen sein.

Zur Steuerung der Bewegung der Fingereinheit 1 sind bei dem dargestellten und insoweit bevorzugten Ausführungsbeispiel wenigstens zwei optische Sensoren 29,30 in Form von Kameras vorgesehen. Die Sensoren 29,30 nehmen den Stapel 20 oder wenigstens einen oberen Teil davon auf. Aus den Bildern und der Lage der Sensoren 29,30 zueinander wird wenigstens ein Teil der Kontur des Stapels 20 und die Lage der Kontur als Distanz und Richtung zu den Sensoren 29,30 erfasst. Die wenigstens teilweise Ermittlung der Lage und der Kontur des Stapels 20 erfolgt mittels der bekannten und sogenannten Methode der Triangulation. Alternativ kann aber auch ein, vorzugsweise optischer, Sensor ausreichend sein, um die Bewegung der Fingereinheit 1 zu steuern. Gleichfalls können aber auch mehr als zwei, vorzugsweise optische, Sensoren vorgesehen sein. Dann ist gegebenenfalls eine umso genauere Steuerung und/oder räumlich komplexere Steuerung möglich, weil beispielsweise der Stapel noch besser und/oder genauer räumlich erfasst werden kann.

Wird anhand der Sensoren 29,30 festgestellt, dass die Höhe des Stapels 20, insbesondere angrenzend zu der Bandfördereinrichtung 23 abgenommen hat, insbesondere weil dort der Stapel 20 bereits teilweise abgetragen worden ist, kann die Position der Bandfördereinheit 23 ebenfalls abgesenkt werden. So können die Stückgüter 10 immer noch problemlos von der Fingereinheit 1 unter Ausnutzung der Schwerkraft auf das Förderband 26 der Bandfördereinrichtung 23 bewegt werden. Die Bandfördereinrichtung 23 könnte gleich auf eine Höhe gebracht werden, die etwas oberhalb des Ladebodens 31 des Laderaums 21 liegt. Wenn der Stapel 20 der Stückgüter 10 dann jedoch angrenzend zu der Bandfördereinrichtung 23 bis fast unter das Dach 32 des Laderaums 21 reicht, würden die zuerst vom Stapel 20 entfernten Stückgüter 10 recht weit nach unten auf die Bandfördereinrichtung 23 fallen. Dies kann zu Beschädigung der Stückgüter 10 oder bedarfsweise im Falle von Packstücken zu einer Beschädigung wenigstens der Verpackung führen. Daher ist es zweckmäßig, wenn sich die Bandfördereinrichtung 23 während des Abtragens des Stapels 20 absenkt.

Wenn die Fingereinheit 1 ein teilweise umgriffenes Stückgut 10 vom Stapel 20 entfernt hat, kann das Stückgut 10 also nach unten auf die Bandfördereinrichtung 23 fallen. Da die Flankenelemente 2,3 der dargestellten Fingereinheit 1 elastisch ausgebildet sind und der Verformung beim teilweisen Umgreifen des Stückguts 10 eine Rückstellkraft entgegensetzen, wird das Stückgut 10, nachdem es vom Stapel 20 gezogen worden ist, nicht mehr von der Fingereinheit 1 gehalten. Das Stückgut 10 fällt nach unten und die Fingereinheit 1 geht infolge der Rückstellkraft der Flankenelemente 2,3 in seine gestreckte Ausgangslage zurück. Die Fingereinheit 1 kann sodann wieder oberhalb des verbliebenen Stapels 20 in Annäherungsrichtung A in den Laderaum 21 eingeführt werden. Wenn die Fingereinheit 1 dann wieder über dem Stapel 20 positioniert ist, kann die Fingereinheit 1 wieder in Greifrichtung G nach unten bewegt werden und wenigstens ein weiteres Stückgut 10 wenigstens teilweise umgreifen, das dann durch eine Bewegung der Fingereinheit 1 in Transportrichtung T vom Stapel entfernt und auf die Bandfördereinrichtung 23 bewegt wird, über die das wenigstens eine Stückgut 10 abtransportiert wird. Es versteht sich, dass neben dem wenigstens einen durch die Fingereinheit 1 umgriffenen Stückgut 10 in einem Schritt auch weitere Stückgüter 10 mit vom Stapel 20 entfernt werden können, und zwar beispielsweise solche Stückgüter 10, die sich am Rand des Stapels 20 befinden. Bei einem nicht sehr tiefen Stapel 20 und/oder Haufen, also einem der sich nicht sehr weit in einer Richtung parallel zur Transportrichtung T bzw. in den Laderaum 21 hinein erstreckt, kann beispielsweise der gesamte Stapel 20 und/oder Haufen durch die Bewegung der Fingereinheit 1 umgeworfen werden und auf die Bandfördereinrichtung 23 fallen, ohne dass der gesamte Stapel 20 und/oder Haufen von der Fingereinheit 1 umgriffen werden muss.

Die Fingereinheit 1 kann sich bei der dargestellten und insoweit bevorzugten Ausführungsform wenigstens in Wesentlichen über die Breite des Stapels 20 und oder des Laderaums 21 erstrecken, um den Stapel 20 gleichzeitig über seine gesamte Breite abtragen zu können. Um die autoadaptive Verformung besser an ungleichmäßig gebildete Stapel 20 anpassen zu können, können über die Breite des Stapels 20 und/oder des Laderaums auch mehrere Fingereinheiten 1 verteilt nebeneinander angeordnet sein. Diese können bedarfsweise unabhängig voneinander gesteuert und/oder bewegt werden, um ein effektives Stückguthandling bereitzustellen. Alternativ oder zusätzlich kann es sich anbieten, wenn der Fingereinheit 1 oder jeder Fingereinheit ein bedarfsweise eigener Antrieb zugeordnet ist. Dann kann die Fingereinheit bewegt werden oder es können die Fingereinheiten, insbesondere unabhängig voneinander, bewegt werden. Eine verfahrensmäßige und konstruktive Vereinfachung kann aber bedarfsweise vorgesehen werden, indem mehrere Fingereinheiten 1, insbesondere alle Fingereinheiten 1 zu einer Handeinheit zusammengefasst werden können. Es wird dann über die Bewegung der Hand, die mehrere Fingereinheiten 1 trägt, eine gemeinsame Bewegung der an der Handeinheit gehaltenen Fingereinheiten 1 bewirkt, ohne dass die Fingereinheiten 1 separat bewegt werden müssen. Das beschriebene Verfahren kann dabei mit nur einer Handeinheit oder einer Mehrzahl von Handeinheiten durchgeführt werden. So kann beispielsweise eine Anpassung an variierende Stapelbreiten oder Laderaumbreiten erfolgen.

Bei den vorliegend dargestellten Ausführungsbeispielen sind die Stückgüter 10, insbesondere Packstücke, zu Stapeln 20 zusammengefügt. Alternativ könnten die Stückgüter 10 aber auch zu einem Haufen oder wenigstens teilweise zu einem Haufen zusammengefügt sein. Die beschriebenen Verfahren und Vorrichtungen kämen dann bedarfsweise analog zur Anwendung.

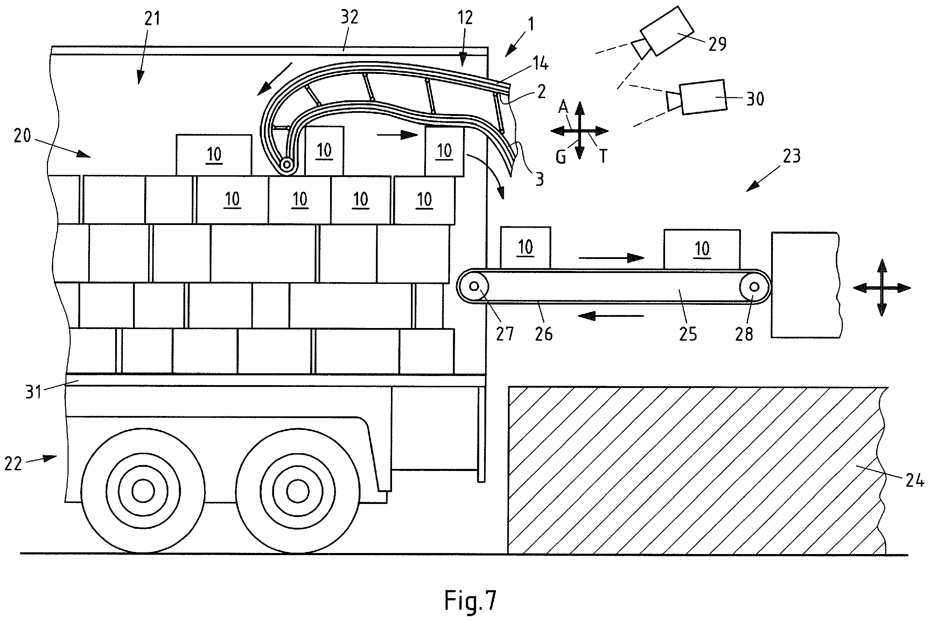

In der Fig. 7 ist das Verfahrensprinzip gemäß Fig. 6 mit der Abweichung dargestellt, dass eine Fingereinheit 1 als Teil einer Bandfördereinrichtung 12 verwendet wird. Um die Fingereinheit 1, die als Tragkonstruktion 13 fungiert, läuft ein Förderband 14 in Pfeilrichtung um. Das durch die autoadaptive Verstellung der Fingereinheit 1 wenigstens teilweise umgriffene Stückgut 10 wird infolge der Bewegung des Förderbands 14 in der Transportrichtung T vom Stapel 20 bewegt und fällt anschließend auf die etwas tiefer bereitgestellte Bandfördereinrichtung 12. Während das wenigstens eine Stückgut 10 vom Stapel 20 bewegt wird, kann eine autoadaptive Verformung der Fingereinheit 1 aufrechterhalten werden, so dass stets ein guter Kontakt zwischen dem Förderband 14 und dem Stückgut 10 aufrechterhalten wird. Die autoadaptive Verformung kann mit dem Stückgut 10 entlang der Bandfördereinrichtung 12 bzw. entlang der Fingereinheit 1 wandern, wobei sich die autoadaptive Verformung bedarfsweise verändern wird.

Infolge der Verwendung der Bandfördereinrichtung 12 zum Entfernen von Stückgütern 10 vom Stapel 20, muss die Fingereinheit 1 bedarfsweise weniger häufig in Transportrichtung T und Annäherungsrichtung A hin und her verstellt werden. Durch ein zunehmendes Verstellen der Fingereinheit 1 bzw. der Bandfördereinrichtung 12 in der Greifrichtung G können nach und nach weitere Stückguter 10 autoadaptiv umgriffen werden und in Transportrichtung T abtransportiert werden. Auf diese Weise kann der Stapel 20 bedarfsweise wenigstens zu einem nicht unerheblichen Teil abgetragen werden, ohne dass die Fingereinheit 1 in der Transportrichtung T und/oder in der Annäherungsrichtung A verstellt werden muss.

Bedarfsweise können auch mehrere Bandfördereinrichtungen 12 verwendet werden, wobei sie nebeneinander angeordnet sein können, wie dies zuvor vom Prinzip für eine Mehrzahl von Fingereinheiten 1 beschrieben worden ist. Die Bandfördereinrichtungen 12 können dabei sowohl separat bewegt und/oder gesteuert oder aber zu wenigstens einer Handeinheit zusammengefügt werden, so dass die Bandfördereinrichtungen 12 über die Handeinheit gemeinsam bewegt und/oder gesteuert werden können. Dabei bietet es sich weiter an, wenn sich die eine Bandfördereinrichtung 12 oder die Mehrzahl von Bandfördereinrichtungen 12 über wenigstens im Wesentlichen die gesamte Breite des Stapels 20, Haufens und/oder Laderaums 21 erstreckt.

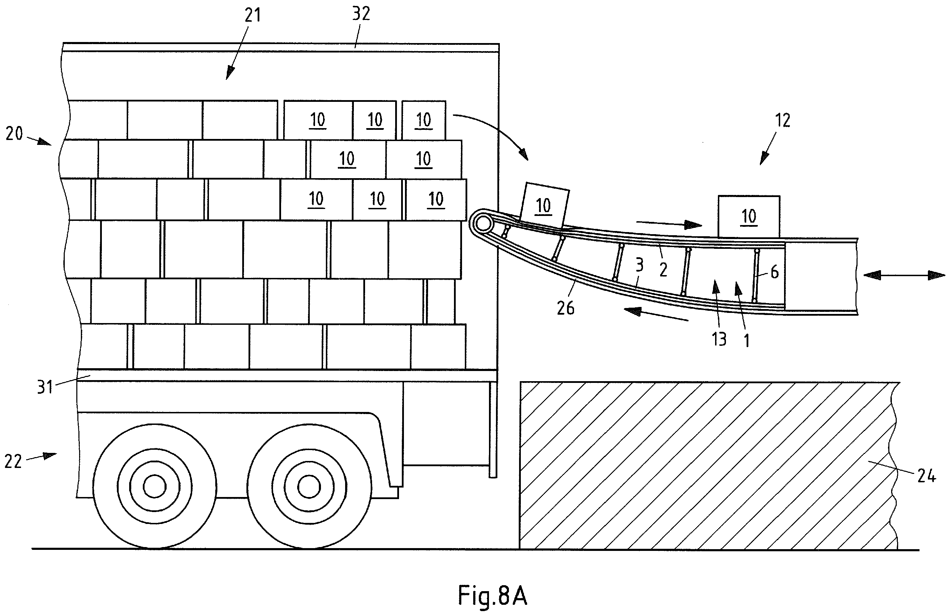

In den Fig. 8A-C ist ein weiterer Verfahrensablauf dargestellt. Bei diesem wird eine Bandfördereinrichtung 12 mit einem Fingerelement 1 wenigstens als Teil der Tragkonstruktion 13 verwendet und neben bzw. hinter dem Stapel 20 aus Stückgütern 10, insbesondere Packstücken, positioniert. Die Stückgüter 10 werden nun vom oberen Ende des Stapels 20 auf die Bandfördereinrichtung 12 bewegt. Dies kann händisch erfolgen oder aber unter Verwendung wenigstens einer weiteren Fingereinheit 1 gemäß Fig. 6 und/oder wenigstens einer weiteren Bandfördereinrichtung 12 gemäß Fig. 7.

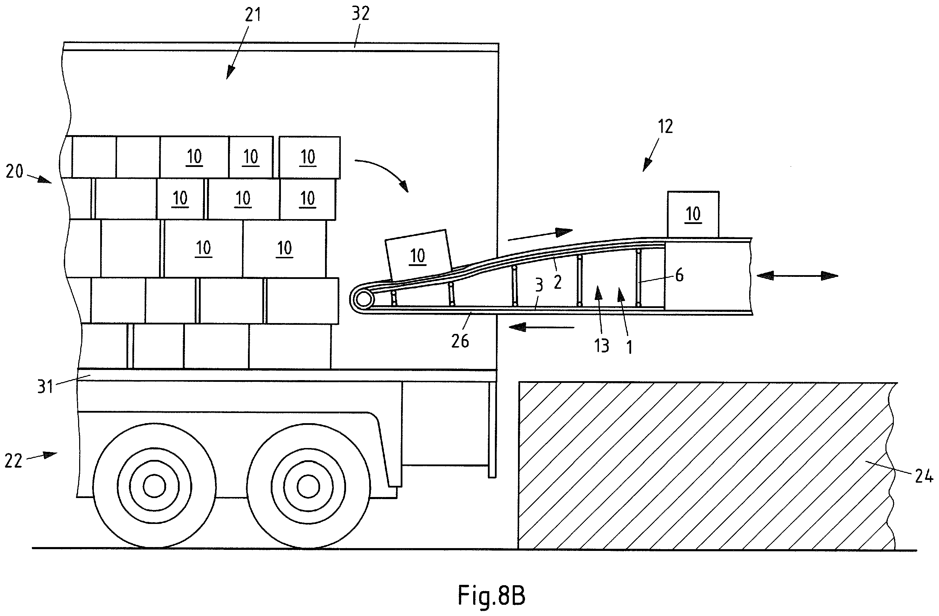

Das freie Ende der Bandfördereinrichtung 12 weist eine Fingereinheit 1 als Tragkonstruktion 13 auf, die in geeigneter Weise gekrümmt werden kann, indem die Flankenelemente 2,3 gegeneinander in Längsrichtung der Fingereinheit 1 verstellt werden. Anfänglich ist der Stapel 20 an Stückgütern 10 angrenzend zu der Bandfördereinrichtung 12 recht hoch. Damit die vom Stapel 20 bewegten Stückgüter 10 nicht zu tief fallen, wird das vordere Ende der Bandfördereinrichtung 12 über ein entsprechendes Verstellen der Fingereinheit 1 nach oben gebogen, wie dies in der Fig. 8A dargestellt ist. Das Verstellen erfolgt wie dies im Prinzip bereits im Zusammenhang mit der Fig. 2A-C beschrieben worden ist. Wenn der Stapel 20 teilweise abgetragen worden ist, ist auch die Höhe des Stapels 20 angrenzend zur Bandfördereinrichtung 12 geringer. Damit dies nicht zu einer Beeinträchtigung des Abtransports der Stückgüter 10 führt, kann die Krümmung des freien Endes der Bandfördereinrichtung 12 wenigstens teilweise rückgängig gemacht werden, wie dies in der Fig. 8B dargestellt ist. In dieser Stellung ist die Fingereinheit 1 im Wesentlichen gestreckt. Da die Höhe des Stapels 20 geringer ist, werden auch bei dieser Stellung der Bandfördereinrichtung 12 keine Stückgüter 10 oder Packstücke beschädigt.

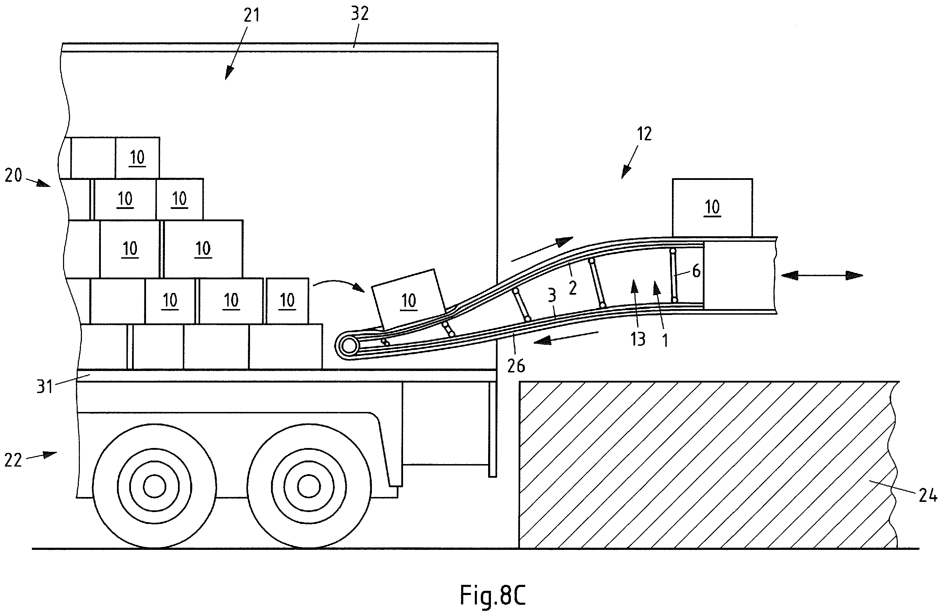

Wenn der Stapel 20 noch weiter abgetragen worden ist, verbleibt nur noch eine sehr geringe Höhe des Stapels 20, jedenfalls angrenzend zur Bandfördereinrichtung 12. Damit die Stückgüter 10 dann noch auf die Bandfördereinrichtung 12 fallen können, muss die Bandfördereinrichtung 12 wenigstens im Bereich des freien Endes bis fast auf den Ladeboden 31 des Laderaums 21 abgesenkt werden, wie dies in der Fig. 8C dargestellt ist. Dies wird beispielsweise erreicht, indem die Fingereinheit 1 der Bandfördereinrichtung 12 aus der gestreckten Stellung gemäß Fig. 8B in die entgegengesetzte Richtung verglichen mit der Fig. 8A gekrümmt wird. Die Fingereinheit 1 wird also nicht nach oben, sondern nach unten, gekrümmt. Durch das gezielte Krümmen des freien Endes der Bandfördereinrichtung 12 ist bedarfsweise eine lineare Höhenverstellung der Bandfördereinrichtung 12 selbst entbehrlich. Gleichwohl ist eine solche Höhenverstellung natürlich möglich. Dennoch kann es zweckmäßig sein, wenn die Bandfördereinrichtung 12, etwa schrittweise, vor und zurück bewegt werden kann, um so weit wie nötig in den Laderaum 21 eintauchen zu können. Daher bietet es sich grundsätzlich an, wenn die Bandfördereinrichtung 12 als ein Teleskopbandförderer ausgebildet ist.

Der in den Fig. 8A-*C dargestellte Bandförderer 12 ist ferner mit einer derart flexiblen Fingereinheit 1 ausgestattet, dass die Stückgüter 10 während des Transports entlang der Bandfördereinrichtung 12 ein autoadaptives Verstellen der Flankenelemente 2 bewirken können, wenn die Stückgüter 10 schwer genug sind. Die Stückgüter 10 drücken dabei das obere Flankenelement 2 nach unten, so dass infolge der Kopplung der Flankenelemente 2,3 durch die Stege 6 eine Krümmung des freien Endes 5 der Fingereinheit 1 bzw. der Bandfördereinrichtung 12 nach oben erfolgt. Das entsprechende Stückgut 10 wird somit wenigstens teilweise umgriffen und der Transport entlang der Bandfördereinrichtung 12 stabilisiert.

## Patentansprüche

1. Verfahren zum Fördern von Stückgütern (10), insbesondere Packstücken, von einem Stapel (20) und/oder Haufen von Stückgütern (10), **dadurch gekennzeichnet dass**
das Verfahren unter Verwendung einer Fingereinheit (1) umfassend wenigstens zwei sich gemeinsam von einem Ende der Fingereinheit (1) zu einem gegenüberliegenden Ende der Fingereinheit (1) erstreckende flexible Flankenelemente (2, 3) durchgeführt wird, wobei die wenigstens zwei flexiblen Flankenelemente (2,3) zwischen den beiden Enden der Fingereinheit (1) über eine Mehrzahl von Stegen (6) jeweils flexibel miteinander verbunden sind, so dass die Fingereinheit (1) wenigstens von einer gekrümmten Stellung in eine gestreckte Stellung und zurück verstellbar ist,
- bei dem die Fingereinheit (1) so in einer Greifrichtung (G) von oben gegen den Stapel (20) und/oder Haufen von Stückgütern (10) gedrückt wird, so dass das wenigstens eine Flankenelement (2,3) durch wenigstens ein Stückgut (10) partiell eingedrückt wird,
- bei dem die Fingereinheit (1) infolge des abschnittsweisen Eindrückens des wenigstens einen Flankenelements (2,3) von einer gestreckten Stellung in eine gekrümmte Stellung verstellt und die Fingereinheit (1), vorzugsweise das wenigstens eine Flankenelement (2,3), dabei das wenigstens eine Stückgut (10) wenigstens abschnittsweise umgreift und
- bei dem das wenigstens eine wenigstens abschnittsweise umgriffene Stückgut (10) von der Fingereinheit (1) wenigstens teilweise in eine senkrecht zur Greifrichtung (G) weisende Transportrichtung vom Stapel (20) und/oder Haufen bewegt wird.

2. Verfahren nach Anspruch 1,
- bei dem einerseits nach dem Bewegen des wenigstens einen wenigstens abschnittsweise umgriffenen Stückguts (10) vom Stapel (20) und/oder Haufen die Fingereinheit (1) unter wenigstens abschnittsweisem Umgreifen wenigstens eines weiteren Stückguts (10) des Stapels (20) und/oder Haufens gegen das wenigstens eine weitere Stückgut (10) gedrückt und andererseits das wenigstens eine weitere Stückgut (10) von der Fingereinheit (1) in Transportrichtung (T) vom Stapel (20) und/oder Haufen bewegt wird und/oder
- bei dem das wenigstens eine wenigstens abschnittsweise umgriffe Stückgut (10) wenigstens teilweise durch eine Bewegung der Fingereinheit (1) in die Transportrichtung (T) vom Stapel (20) und/oder Haufen bewegt wird und/oder
- bei dem das wenigstens eine wenigstens abschnittsweise umgriffene Stückgut (10) wenigstens teilweise durch eine Bewegung eines zwischen der Fingereinheit (1) und dem wenigstens einen abschnittsweise umgriffenen Stückgut (10) vorgesehenen Förderbands (14) in der Transportrichtung (T) vom Stapel (20) und/oder Haufen bewegt wird, wobei, vorzugsweise, eine die Fingereinheit (1) und das Förderband (14) umfassende Bandfördereinrichtung (12) nach einem der Ansprüche 12 bis 15 verwendet wird.

3. Verfahren nach Anspruch 1 oder 2,
- bei dem das wenigstens eine wenigstens abschnittsweise umgriffene Stückgut (10) wenigstens teilweise durch eine Bewegung eines zwischen der Fingereinheit (1) und dem wenigstens einen abschnittsweise umgriffenen Stückgut (10) vorgesehenen Transportmittels, etwa in Form von Rollen und/oder verstellbaren Härchen, in der Transportrichtung (T) vom Stapel (20) und/oder Haufen bewegt wird und/oder
- bei dem sich das wenigstens eine von der Fingereinheit (1) wenigstens abschnittsweise umgriffene Stückgut (10) nach dem Bewegen vom Stapel (20) und/oder Haufen unter einer Verstellung der Fingereinheit (1) aus einer gekrümmten Stellung in eine gestreckte Stellung in Schwerkraftrichtung von der Fingereinheit (1) löst und/oder
- bei dem die Fingereinheit (1) vor dem Drücken gegen den Stapel (20) und/oder Haufen von Stückgütern (10), vorzugsweise in einer Annäherungsrichtung (A) wenigstens teilweise entgegengesetzt zur Transportrichtung (T), über wenigstens Teile des Stapels (20) und/oder Haufens von Stückgütern (10) bewegt wird.

4. Verfahren nach einem der Ansprüche 1 bis 3,
- bei dem eine Bandfördereinrichtung (12,23) seitlich neben den Stapel (20) und/oder Haufen positioniert wird und
- bei dem das wenigstens eine von der Fingereinheit (1) in Transportrichtung (T) vom Stapel (20) und/oder Haufen bewegte Stückgut (10) von der Bandfördereinrichtung (12,23) aufgefangen und auf dem Förderband (14,26) der Bandfördereinrichtung (12,23) vom Stapel (20) und/oder Haufen weg transportiert wird.

5. Verfahren nach Anspruch 4,
- bei dem als Bandfördereinrichtung (12,23) ein Teleskopbandförderer und/oder eine Bandfördereinrichtung (12) nach einem der Ansprüche 12 bis 15 verwendet wird und/oder
- bei dem die Bandfördereinrichtung (12,23) mit abnehmender Höhe des an die Bandfördereinrichtung (12,23) angrenzenden Bereichs des Stapels (20) und/oder Haufens zunehmend weiter nach unten verstellt wird.

6. Verfahren nach einem der Ansprüche 1 bis 5,
- bei dem einerseits die Lage und/oder die Kontur des Stapels (20) und/oder des Haufens von Stückgütern(10) wenigstens teilweise von einem Sensor (29,30), vorzugsweise einem optischen Sensor (29,30), insbesondere einer Kamera, erfasst und andererseits die Bewegung der Fingereinheit (1) wenigstens teilweise in Abhängigkeit der von dem Sensor (29,30) erfassten Lage und/oder Kontur des Stapels (20) und/oder des Haufens von Stückgütern (10) gesteuert wird und
- bei dem, vorzugsweise, die Lage und/oder die Kontur des Stapels (20) und/oder des Haufens wenigstens teilweise mittels Triangulation ermittelt wird.

7. Verfahren nach einem der Ansprüche 1 bis 6,
- bei dem eine Fingereinheit (1) mit wenigstens einem Drucksensor, vorzugsweise an wenigstens einem Flankenelement (2,3), verwendet wird und/oder
- bei dem eine Mehrzahl von Fingereinheiten (1) sich im Wesentlichen über die gesamte Breite des Stapels (20) und/oder Haufens und/oder über die gesamte Breite eines den Stapel (20) und/oder Haufen aufweisenden Laderaums (21), insbesondere eines Lastkraftwagens, Sattelaufliegers, Anhängers, Containers, Transportbehälters, Wechselbehälters und/oder Rollbehälters (22), verteilen

8. Verfahren nach einem der Ansprüche 1 bis 7,
- bei dem eine Mehrzahl von nebeneinander angeordneten, vorzugsweise zu einer Handeinheit zusammengefassten, Flankenelementen (2,3) verwendet werden und
- bei dem, vorzugsweise, die Mehrzahl von Flankenlementen (2,3) gleichzeitig und parallel zueinander in der Annäherungsrichtung (A), Greifrichtung (G) und/oder Transportrichtung (T) bewegt werden.

9. Verfahren zum Fördern von Stückgütern (10), insbesondere Packstücken, von einem Stapel (20) und/oder Haufen von Stückgütern (10), unter Verwendung einer Bandfördereinrichtung (12), vorzugsweise Teleskopbandförderer, zum Fördern von Stückgütern (10), insbesondere Packstücken, mit einem um eine Tragkonstruktion (13) umlaufenden Förderband (14), wobei die Tragkonstruktion (13) wenigstens eine das Förderband (14) wenigstens in einer Betriebssituation stützende Fingereinheit (1) aufweist, **dadurch gekennzeichnet dass** die Fingereinheit (1) wenigstens zwei sich gemeinsam von einem Ende (4) der Fingereinheit (1) zu einem gegenüberliegenden Ende (5) der Fingereinheit (1) erstreckende flexible Flankenelemente (2,3) aufweist, wobei die wenigstens zwei flexiblen Flankenelemente (2,3) zwischen den beiden Enden (4,5) der Fingereinheit (1) über eine Mehrzahl von Stegen (6) jeweils flexibel miteinander verbunden sind, so dass die Fingereinheit (1) wenigstens von einer gekrümmten Stellung in eine gestreckte Stellung und zurück verstellbar ist, wobei die Fingereinheit (1) an einem freien Ende des Bandförderers (12) vorgesehen ist und wobei wenigstens das dem freien Ende des Bandförderers (12) zugeordnete Ende (5) der wenigstens einen Fingereinheit (1) eine Umlenkung, insbesondere Umlenkrolle (15), zum Umlenken des Förderbands (14) aufweist,
- bei dem die Bandfördereinrichtung (12) seitlich neben dem Stapel (20) und/oder Haufen von Stückgütern (10) positioniert wird,
- bei dem auf dem Stapel (20) und/oder Haufen liegende Stückgüter (10) vom Stapel (20) und/oder Haufen auf das Förderband (14) der Bandfördereinrichtung (12) bewegt werden und
- bei dem die Fingereinheit (1) während des Bewegens der Stückgüter (10) von dem Stapel (20) und/oder Haufen zur Verstellung des freien Endes der Bandfördereinrichtung (12) nach oben oder unten zwischen wenigstens einer gekrümmten Stellung und einer gestreckten Stellung verstellt wird.

10. Verfahren nach Anspruch 9,
- bei dem wenigstens ein auf dem Stapel (20) und/oder Haufen liegendes Stückgut (10) durch ein Verfahren nach einem der Ansprüche 1 bis 8 vom Stapel (20) und/oder Haufen auf das Förderband (14) der Bandfördereinrichtung (12) bewegt wird und/oder
- bei dem eine Bandfördereinrichtung (12) nach einem der Ansprüche 12 bis 15 verwendet wird und/oder
- bei dem das freie Ende der Bandfördereinrichtung (12) mit abnehmender Höhe des an die Bandfördereinrichtung (12) angrenzenden Bereichs des Stapels (20) und/oder Haufens zunehmend nach unten verstellt wird.

11. Verfahren nach einem der Ansprüche 9 oder 10,
- bei dem die Fingereinheit (1) über eine Antriebseinheit zum Verstellen der wenigstens zwei Flankenelemente (2,3) in einer Längsrichtung der Fingereinheit (1) gegeneinander von einer zwischen wenigstens einer gekrümmten und einer gestreckten Stellung verstellt wird und/oder
- bei dem wenigstens ein von dem Förderband (14) gefördertes Stückgut (10) die Fingereinheit (1), insbesondere wenigstens ein Flankenelement (2,3), lokal so eindrückt, dass die Fingereinheit (1), insbesondere die wenigstens eine Flankenelement (2,3), neben dem Stückgut (10) nach oben, insbesondere in Richtung des Stückguts (10), ausgelenkt wird.

12. Bandfördereinrichtung (12), vorzugsweise Teleskopbandförderer, zum Fördern von Stückgütern (10), insbesondere Packstücken, mit einem um eine Tragkonstruktion (13) umlaufenden Förderband (14),
**dadurch gekennzeichnet, dass** die Tragkonstruktion (13) wenigstens eine das Förderband (14) wenigstens in einer Betriebssituation stützende Fingereinheit (1) aufweist, dass die Fingereinheit (1) wenigstens zwei sich gemeinsam von einem Ende (4) der Fingereinheit (1) zu einem gegenüberliegenden Ende (5) der Fingereinheit (1) erstreckende flexible Flankenelemente (2,3) aufweist und dass die wenigstens zwei flexiblen Flankenelemente (2,3) zwischen den beiden Enden (4,5) der Fingereinheit (1) über eine Mehrzahl von Stegen (6) jeweils flexibel miteinander verbunden sind, so dass die Fingereinheit (1) wenigstens von einer gekrümmten Stellung in eine gestreckte Stellung und zurück verstellbar ist.

13. Bandfördereinrichtung nach Anspruch 12 **dadurch gekennzeichnet,**
- **dass** die wenigstens zwei Flankenelemente (2,3) und die Mehrzahl von Stegen (6) derart miteinander verbunden und ausgebildet sind, so dass ein Eindrücken wenigstens eines Flankenelements (2,3) in einer Eindrückrichtung schräg, insbesondere senkrecht, zur Längserstreckung des Flankenelements (2,3) in einer Auslenkung des Flankenelements (2,3) außerhalb des eingedrückten Bereichs in einer Richtung entgegengesetzt zur Eindrückrichtung resultiert und/oder
- **dass** die Verstellung der Flankenelemente (2,3) aus der wenigstens einen gestreckten Stellung in die wenigstens eine gekrümmte Stellung gegen eine Rückstellkraft, insbesondere der Flankenelemente (2,3), erfolgt und, vorzugsweise, dass die Verstellung der Flankenelemente (2,3) aus der wenigstens einen gekrümmten Stellung in die wenigstens eine gestreckte Stellung durch die Rückstellkraft bewirkt wird und/oder
- **dass** die Mehrzahl von Stegen (6) und die wenigstens zwei Flankenelemente (2,3) jeweils einen spitzen Winkel, vorzugsweise zwischen 5° und 85°, und einen stumpfen Winkel, vorzugsweise zwischen 95° und 175°, bilden.

14. Bandfördereinrichtung nach Anspruch 12 oder 13,
**dadurch gekennzeichnet,**
- **dass** das Förderband (14) entlang wenigstens eines Flankenelements (2,3) der Fingereinheit (1) geführt wird und, vorzugsweise, von dem Flankenelement (2,3) gestützt wird, wobei, vorzugsweise, das Förderband (14) so entlang des Flankenelements (2,3) geführt wird, dass das Förderband (14) unter Last gegen das Flankenelement (2,3) drücken kann, um die Fingereinheit (1) in eine gekrümmte Stellung zu verstellen, und/oder
- **dass** wenigstens ein Ende der wenigstens einen Fingereinheit (1) eine Umlenkung, insbesondere Umlenkrolle (15), zum Umlenken des Förderbands (14) aufweist und/oder
- **dass** die Fingereinheit (1) an einem freien Ende der Bandfördereinrichtung (12) vorgesehen ist.

15. Bandfördereinrichtung nach einem der Ansprüche 12 bis 14,
**dadurch gekennzeichnet, dass**
- die wenigstens zwei Flankenelemente (2,3), insbesondere mit freien Enden (11), an einem Ende (5) der wenigstens einen Fingereinheit (1) direkt miteinander verbunden sind und/oder
- dass wenigstens eine Antriebseinheit zum Verstellen der wenigstens zwei Flankenelemente (2,3) in einer Längsrichtung der Fingereinheit (1) gegeneinander, vorzugsweise unter Verstellung von wenigstens einer gestreckten Stellung in eine gekrümmte Stellung und zurück, vorgesehen ist.

## Claims

1. Method for conveying general cargo (10), in particular packaged goods, from a stack (20) and/or pile of general cargo (10),
**characterised in that**
the method is carried out using a finger unit (1) comprising at least two flexible side elements (2, 3) extending together from one end of the finger unit (1) to an opposite end of the finger unit (1), wherein the at least two flexible side elements (2, 3) are each flexibly joined together by means of a plurality of crosspieces (6) between the two ends of the finger unit (1), so that the finger unit (1) is at least moveable from a bent position into an extended position and back again,
- in which the finger unit (1) is pressed in a gripping direction (G) from above against the stack (20) and/or pile of general cargo (10) such that the at least one side element (2, 3) is partially pressed into by at least one item of general cargo (10),
- in which the finger unit (1) is moved from an extended position into a bent position as a result of the at least one side element (2, 3) being pressed into in sections and the finger unit (1), preferably the at least one side element (2, 3), at least in sections grips around the at least one item of general cargo (10), and
- in which the at least one item of general cargo (10), which is at least in sections gripped around, is at least partly moved from the stack (20) and/or pile into a transport direction pointing perpendicularly to the gripping direction (G) by the finger unit (1).

2. Method according to Claim 1,
- in which, on the one hand, after moving the at least one item of general cargo (10), which is at least in sections gripped around, from the stack (20) and/or pile, the finger unit (1) by at least in sections gripping around at least one further item of general cargo (10) of the stack (20) and/or pile is pressed against the at least one further item of general cargo (10) and, on the other hand, the at least one further item of general cargo (10) is moved from the stack (20) and/or pile in transport direction (T) by the finger unit (1), and/or
- in which the at least one item of general cargo (10), which is at least in sections gripped around, is at least partly moved from the stack (20) and/or pile into the transport direction (T) by a movement of the finger unit (1), and/or
- in which the at least one item of general cargo (10), which is at least in sections gripped around, is at least partly moved from the stack (20) and/or pile in the transport direction (T) by a movement of a conveyor belt (14) provided between the finger unit (1) and the at least one item of general cargo (10), which is in sections gripped around, wherein preferably a belt conveyor device (12) comprising the finger unit (1) and the conveyor belt (14) is used according to any one of Claims 12 to 15.

3. Method according to Claim 1 or 2,
- in which the at least one item of general cargo (10), which is at least in sections gripped around, is at least partly moved from the stack (20) and/or pile in the transport direction (T) by a movement of a transport means, for example in the form of rollers and/or moveable bristles, provided between the finger unit (1) and the at least one item of general cargo (10), which is in sections gripped around, and/or
- in which the at least one item of general cargo (10), which is at least in sections gripped around by the finger unit (1), after being moved from the stack (20) and/or pile is released from the finger unit (1) in the direction of gravity by a movement of the finger unit (1) from a bent position into an extended position, and/or
- in which the finger unit (1) before being pressed against the stack (20) and/or pile of general cargo (10) is moved over at least parts of the stack (20) and/or pile of general cargo (10), preferably in an approach direction (A) at least partly contrary to the transport direction (T).

4. Method according to any one of Claims 1 to 3,
- in which a belt conveyor device (12, 23) is positioned laterally next to the stack (20) and/or pile, and
- in which the at least one item of general cargo (10) moved from the stack (20) and/or pile in transport direction (T) by the finger unit (1) is caught by the belt conveyor device (12, 23) and transported away from the stack (20) and/or pile on the conveyor belt (14, 26) of the belt conveyor device (12, 23).

5. Method according to Claim 4,
- in which a telescopic belt conveyor and/or a belt conveyor device (12) is used as the belt conveyor device (12, 23) according to any one of Claims 12 to 15, and/or
- in which the belt conveyor device (12, 23) is increasingly moved further downwards as the height of the area of the stack (20) and/or pile adjacent to the belt conveyor device (12, 23) decreases.

6. Method according to any one of Claims 1 to 5,
- in which, on the one hand, the position and/or the contour of the stack (20) and/or of the pile of general cargo (10) is at least partly detected by a sensor (29, 30), preferably an optical sensor (29, 30), in particular a camera, and, on the other hand, the movement of the finger unit (1) is at least partly controlled depending on the position and/or contour of the stack (20) and/or of the pile of general cargo (10) detected by the sensor (29, 30), and
- in which preferably the position and/or the contour of the stack (20) and/or of the pile is at least party determined by triangulation.

7. Method according to any one of Claims 1 to 6,
- in which the finger unit (1) is used with at least one pressure sensor, preferably on at least one side element (2, 3), and/or
- in which a plurality of finger units (1) are distributed essentially over the entire width of the stack (20) and/or pile and/or over the entire width of a cargo hold (21) comprising the stack (20) and/or pile, in particular of a lorry, a semi-trailer, trailer, container, shipping container, interchangeable container and/or roller container (22).

8. Method according to any one of Claims 1 to 7,
- in which a plurality of side elements (2, 3) are used which are arranged next to one another, preferably combined to form a hand unit, and
- in which, preferably, the plurality of side elements (2, 3) are moved simultaneously and parallel to one another in the approach direction (A), gripping direction (G) and/or transport direction (T).

9. Method for conveying general cargo (10), in particular packaged goods, from a stack (20) and/or pile of general cargo (10) using a belt conveyor device (12), preferably a telescopic belt conveyor, for conveying general cargo (10), in particular packaged goods, having a conveyor belt (14) running around a supporting structure (13), wherein the supporting structure (13) has at least one finger unit (1) supporting the conveyor belt (14) at least in an operating situation,
**characterised in that**
the finger unit (1) has at least two flexible side elements (2, 3) extending together from one end (4) of the finger unit (1) to an opposite end (5) of the finger unit (1), wherein the at least two flexible side elements (2, 3) are each flexibly joined together by means of a plurality of crosspieces (6) between the two ends (4, 5) of the finger unit (1), so that the finger unit (1) is at least moveable from a bent position into an extended position and back again, wherein the finger unit (1) is provided on one free end of the belt conveyor (12), and wherein at least the end (5) of the at least one finger unit (1) assigned to the free end of the belt conveyor (12) has a diverter, in particular a diverter roller (15) for diverting the conveyor belt (14),
- in which the belt conveyor device (12) is positioned laterally next to the stack (20) and/or pile of general cargo (10),
- in which general cargo (10) placed on the stack (20) and/or pile is moved onto the conveyor belt (14) of the belt conveyor device (12) from the stack (20) and/or pile, and
- in which the finger unit (1) during the movement of the general cargo (10) from the stack (20) and/or pile is moved upwards or downwards between at least one bent position and an extended position to move the free end of the belt conveyor device (12).

10. Method according to Claim 9,
- in which at least one item of general cargo (10) placed on the stack (20) and/or pile is moved by means of a method according to any one of Claims 1 to 8 from the stack (20) and/or pile onto the conveyor belt (14) of the belt conveyor device (12), and/or
- in which a belt conveyor device (12) is used according to any one of Claims 12 to 15, and/or
- in which the free end of the belt conveyor device (12) is increasingly moved downwards as the height of the area of the stack (20) and/or pile adjacent to the belt conveyor device (12, 23) decreases.

11. Method according to either of Claims 9 and 10,
- in which the finger unit (1) is moved by means of a drive unit, for moving the at least two side elements (2, 3) in a longitudinal direction of the finger unit (1) against each other, between at least one bent and an extended position, and/or
- in which at least one item of general cargo (10) conveyed by the conveyor belt (14) locally presses into the finger unit (1), in particular into at least one side element (2, 3), such that the finger unit (1), in particular the at least one side element (2, 3), next to the item of general cargo (10) is deflected upwards, in particular in the direction of the item of general cargo (10).

12. Belt conveyor device (12), preferably a telescopic belt conveyor, for conveying general cargo (10), in particular packaged goods, having a conveyor belt (14) running around a supporting structure (13),
**characterised in that**
the supporting structure (13) has at least one finger unit (1) supporting the conveyor belt (14) at least in an operating situation, **in that** the finger unit (1) has at least two flexible side elements (2, 3) extending together from one end (4) of the finger unit (1) to an opposite end (5) of the finger unit (1), and **in that** the at least two flexible side elements (2, 3) are each flexibly joined together by means of a plurality of crosspieces (6) between the two ends (4, 5) of the finger unit (1), so that the finger unit (1) is at least moveable from a bent position into an extended position and back again.

13. Belt conveyor device according to Claim 12,
**characterised in that**
- the at least two side elements (2, 3) and the plurality of crosspieces (6) are joined together and designed in such a way that a pressing in of at least one side element (2, 3) in a pressing-in direction inclined, in particular perpendicular, to the longitudinal extension of the side element (2, 3) results in a deflection of the side element (2, 3) outside the pressed-in area in a direction contrary to the pressing-in direction, and/or in that
- the movement of the side elements (2, 3) from the at least one extended position into the at least one bent position is effected against a restoring force, in particular of the side elements (2, 3), and preferably **in that** the movement of the side elements (2, 3) from the at least one extended position into the at least one bent position is brought about by the restoring force, and/or **in that**
- the plurality of crosspieces (6) and the at least two side elements (2, 3) in each case form an acute angle, preferably between 5° and 85°, and an obtuse angle, preferably between 95° and 175°.

14. Belt conveyor device according to Claim 12 or 13,
**characterised in that**
- the conveyor belt (14) is guided along at least one side element (2, 3) of the finger unit (1) and, preferably, supported by the side element (2, 3), wherein, preferably, the conveyor belt (14) is guided along the side element (2, 3) such that the conveyor belt (14) under load can press against the side element (2, 3), in order to move the finger unit (1) into a bent position, and/or **in that**
- at least one end of the at least one finger unit (1) has a diverter, in particular a diverter roller (15) for diverting the conveyor belt (14), and/or **in that**
- the finger unit (1) is provided at one free end of the belt conveyor device (12).

15. Belt conveyor device according to any one of Claims 12 to 14,
**characterised in that**
- the at least two side elements (2, 3), in particular with free ends (11), are directly joined together at one end (5) of the at least one finger unit (1), and/or **in that**
- at least one drive unit is provided for moving the at least two side elements (2, 3) in a longitudinal direction of the finger unit (1) against each other, preferably moving from at least one extended position into a bent position and back again.

## Revendications

1. Procédé de convoyage de marchandises (10), en particulier de colis, depuis une pile (20) et/ou un tas de marchandises (10), **caractérisé en ce que** le procédé est effectué en utilisant une unité à doigts (1) comportant au moins deux éléments de flancs (2, 3) flexibles s'étendant conjointement depuis une extrémité de l'unité à doigts (1) vers une extrémité opposée de l'unité à doigts (1),
dans lequel les au moins deux éléments de flancs flexibles (2, 3) entre les deux extrémités de l'unité à doigts (1) sont mutuellement reliés, respectivement de manière flexible, par l'intermédiaire d'une multitude de barres (6) de sorte à pouvoir déplacer l'unité à doigts (1) au moins depuis une position incurvée dans une position étirée et inversement,
- lors duquel l'unité à doigts (1) est pressée de telle sorte dans une direction de préhension (G) depuis le haut contre la pile (20) et/ou le tas de marchandises (10) que le au moins un élément de flancs (2, 3) est partiellement enfoncé par au moins une marchandise (10),
- lors duquel l'unité à doigts (1), suite à l'enfoncement partiel d'au moins un élément de flancs (2, 3), est déplacée depuis une position étirée dans une position incurvée et l'unité à doigts (1), de préférence le au moins un élément à flancs (2, 3), entoure à cet effet la au moins une marchandise (10) au moins partiellement et
- lors duquel la au moins une marchandise (10), au moins partiellement entourée, est déplacée par l'unité à doigts (1), au moins partiellement dans une direction de transport orientée perpendiculairement à une direction de préhension (G), depuis une pile (20) et/ou un tas.

2. Procédé selon la revendication 1,
- lors duquel, d'une part, après le déplacement d'au moins une marchandise (10), au moins partiellement entourée, depuis une pile (20) et/ou un tas, l'unité à doigts (1) est pressée contre la au moins une autre marchandise (10) de la pile (20) et/ou du tas en entourant au moins partiellement au moins une autre marchandise (10) et, d'autre part, la au moins une autre marchandise (10) est déplacée par l'unité à doigts (1) dans la direction de transport (T) depuis la pile (20) et/ou le tas et/ou
- lors duquel la au moins une marchandise (10), au moins partiellement entourée, est déplacée au moins partiellement par un mouvement de l'unité à doigts (1) dans la direction de transport (T) depuis la pile (20) et/ou le tas et/ou
- lors duquel la au moins une marchandise (10), au moins partiellement entourée, est déplacée au moins partiellement par un mouvement d'un convoyeur (14) prévu entre l'unité à doigts (1) et la au moins une marchandise (10), au moins partiellement entourée, dans la direction de transport (T) depuis la pile (20) et/ou le tas, où, de préférence, l'on utilise un dispositif convoyeur à bande (12) comportant l'unité à doigts (1) et le convoyeur (14) selon l'une des revendications 12 à 15.

3. Procédé selon la revendication 1 ou 2,
- lors duquel la au moins une marchandise (10) au moins partiellement entourée est déplacée au moins partiellement par un mouvement d'un moyen de transport, par exemple sous forme de rouleaux et/ou de poils réglables, prévu entre l'unité à doigts (1) et la au moins une marchandise (10), au moins partiellement entourée, dans la direction de transport (T) depuis la pile (20) et/ou le tas et/ou
- lors duquel la au moins une marchandise (10), entourée au moins partiellement par l'unité à doigts (1), se détache de l'unité à doigts (1), après le déplacement depuis la pile (20) et/ou le tas, par le déplacement de l'unité à doigts (1) depuis une position incurvée dans une position étirée dans le sens de gravité et/ou
- lors duquel l'unité à doigts (1), avant de faire pression contre la pile (20) et/ou le tas de marchandises (10), est déplacée, de préférence dans une direction de rapprochement (A) au moins partiellement opposée à la direction de transport (T), sur au moins des parties de la pile (20) et/ou du tas de marchandises (10).

4. Procédé selon l'une des revendications 1 à 3,
- lors duquel un dispositif convoyeur à bande (12, 23) est positionné latéralement à côté de la pile (20) et/ou du tas et
- lors duquel la au moins une marchandise (10) déplacée par l'unité à doigts (1) dans la direction de transport (T) depuis la pile (20) et/ou le tas, est capturée par le dispositif convoyeur à bande (12, 23) et est transportée sur le convoyeur (14, 26) du dispositif convoyeur à bande (12,23) depuis la pile (20) et/ou le tas.

5. Procédé selon la revendication 4,
- lors duquel l'on utilise en tant que dispositif convoyeur à bande (12, 23) un convoyeur à bande télescopique et/ou un dispositif convoyeur à bande (12) selon l'une des revendications 12 à 15 et/ou
- lors duquel le dispositif convoyeur à bande (12, 23) est déplacé progressivement encore plus vers le bas avec une hauteur décroissante de la zone de la pile (20) et/ou du tas adjacente au dispositif convoyeur à bande (12, 23).

6. Procédé selon l'une des revendications 1 à 5,
- lors duquel, d'une part, la position et/ou le profil de la pile (20) et/ou du tas de marchandises (10) est saisi(e) au moins partiellement par un capteur (29, 30), de préférence un capteur optique (29, 30), en particulier d'une caméra et, d'autre part, le mouvement de l'unité à doigts (1) est commandé au moins partiellement en fonction de la position et/ou du profil de la pile (20) et/ou du tas de marchandises (10) détecté(e) par le capteur (29, 30) et
- lors duquel, de préférence, l'emplacement et/ou le profil de la pile (20) et/ou du tas est déterminé au moins partiellement par triangulation.

7. Procédé selon l'une des revendications 1 à 6,
- lors duquel une unité à doigts (1) est utilisée avec au moins un capteur de pression, de préférence au niveau d'au moins un élément de flancs (2, 3), et/ou
- lors duquel une multitude d'unités à doigts (1) se répartit essentiellement sur l'ensemble de la largeur de la pile (20) et/ou du tas et/ou sur l'ensemble de la largeur d'un espace de chargement (21) présentant la pile (20) et/ou le tas, en particulier d'un poids lourd, d'une semi-remorque, d'une remorque, d'un conteneur, d'un conteneur de transport, d'un conteneur interchangeable et/ou d'un conteneur roulant (22).

8. Procédé selon l'une des revendications 1 à 7,
- lors duquel l'on utilise une multitude d'éléments de flancs (2, 3) agencés les uns à côté des autres, de préférence regroupés en une unité et
- lors duquel, de préférence, la multitude d'éléments de flancs (2, 3) est déplacée simultanément et parallèlement les uns par rapport aux autres dans la direction de rapprochement (A), dans la direction de préhension (G) et/ou dans la direction de transport (T).

9. Procédé de convoyage de marchandises (10), en particulier de colis, depuis une pile (20) et/ou un tas de marchandises (10), en utilisant un dispositif convoyeur à bande (12), de préférence un convoyeur à bande télescopique, pour convoyer des marchandises (10), en particulier des colis, avec un convoyeur (14) passant autour d'une structure porteuse (13), où la structure porteuse (13) présente au moins une unité à doigts (1) soutenant le convoyeur (14) au moins dans une situation de fonctionnement, **caractérisé en ce que** l'unité à doigts (1) présente au moins deux éléments de flancs (2, 3) flexibles s'étendant conjointement depuis une extrémité (4) de l'unité à doigts (1) vers une extrémité opposée (5) de l'unité à doigts (1), où les au moins deux éléments de flancs (2,3) flexibles sont reliés mutuellement, respectivement de manière flexible, entre les deux extrémité (4, 5) de l'unité à doigts (1) par une multitude de barres (6), de telle sorte que l'unité à doigts (1) est déplaçable au moins depuis une position incurvée dans une position étirée et inversement, où l'on prévoit l'unité à doigts (1) au niveau d'une extrémité libre du convoyeur à bande (12) et où au moins l'extrémité (5) de la au moins une unité à doigts (1) associée à l'extrémité libre du convoyeur à bande (12) présente une déviation, en particulier une poulie de renvoi (15), pour dévier le convoyeur (14),
- lors duquel le dispositif convoyeur à bande (12) est positionné latéralement à côté de la pile (20) et/ou du tas de marchandises (10),
- lors duquel les marchandises (10) gisant sur la pile (20) et/ou le tas sont déplacées depuis la pile (20) et/ou le tas sur le convoyeur (14) du dispositif convoyeur à bande (12) et
- lors duquel l'unité à doigts (1) est déplacée pendant le déplacement des marchandises (10) depuis la pile (20) et/ou le tas pour le déplacement de l'extrémité libre du dispositif convoyeur à bande (12) vers le haut ou vers le bas entre au moins une position incurvée et une position étirée.

10. Procédé selon la revendication 9,
- lors duquel au moins une marchandise (10) gisant sur la pile (20) et/ou sur le tas est déplacée depuis la pile (20) et/ou le tas sur le convoyeur (14) du dispositif convoyeur à bande (12) par un procédé selon l'une des revendications 1 à 8, et/ou
- lors duquel l'on utilise un dispositif convoyeur à bande (12) selon l'une des revendications 12 à 15 et/ou
- lors duquel l'extrémité libre du dispositif convoyeur à bande (12) est déplacée progressivement vers le bas avec une hauteur décroissante de la zone de la pile (20) et/ou du tas adjacente au dispositif convoyeur à bande (12).

11. Procédé selon l'une des revendications 9 ou 10,
- lors duquel l'unité à doigts (1) est déplacée par une unité d'entraînement pour le déplacement des au moins deux éléments de flancs (2, 3) l'un contre l'autre dans une direction longitudinale de l'unité à doigts (1) depuis au moins une position incurvée en une position étirée et/ou
- lors duquel au moins une marchandise (10) convoyée par le convoyeur (14) enfonce localement l'unité à doigts (1), en particulier au moins un élément de flancs (2, 3), de telle sorte que l'unité à doigts (1), en particulier le au moins un élément de flancs (2, 3), est déviée vers le haut à côté de la marchandise (10), en particulier en direction de la marchandise (10).

12. Dispositif convoyeur à bande (12), de préférence un convoyeur à bande télescopique, pour convoyer des marchandises (10), en particulier des colis, avec un convoyeur (14) passant autour d'une structure porteuse (13),
**caractérisé en ce que**
la structure porteuse (13) présente au moins une unité à doigts (1) soutenant le convoyeur (14) au moins dans une situation de fonctionnement, **en ce que** l'unité à doigts (1) présente au moins deux éléments de flancs (2, 3) s'étendant conjointement depuis une extrémité (4) de l'unité à doigts (1) vers une extrémité opposée (5) de l'unité à doigts (1), et **en ce que** les au moins deux éléments de flancs (2, 3) flexibles sont mutuellement reliés, respectivement de manière flexible, entre les deux extrémités (4, 5) de l'unité à doigts (1) par une multitude de barres (6), de telle sorte que l'unité à doigts (1) est déplaçable au moins depuis une position incurvée dans une position étirée et inversement.

13. Dispositif convoyeur à bande selon la revendication 12,
**caractérisé en ce que**,
- les au moins deux éléments de flancs (2, 3) et la multitude de barres (6) sont mutuellement reliés et conçus de telle sorte qu'un enfoncement d'au moins un élément de flancs (2, 3) dans une direction d'enfoncement, de manière inclinée, en particulier verticale, par rapport à l'extension longitudinale de l'élément de flancs (2, 3) résulte dans une déviation de l'élément de flancs (2,3) hors de la zone enfoncée dans une direction opposée à la direction d'enfoncement et/ou
- le déplacement des éléments de flancs (2, 3) depuis la au moins une position étirée dans la au moins une position incurvée a lieu contre une force de rappel, en particulier des éléments de flancs (2, 3) et, de préférence, **en ce que** le déplacement des éléments de flancs (2, 3) depuis la au moins une position incurvée dans la au moins une position étirée est déclenché par la force de rappel et/ou
- la multitude de barres (6) et les au moins deux éléments de flancs (2, 3) forment respectivement un angle aigu, de préférence entre 5° et 85°, et un angle obtus, de préférence entre 95° et 175°.

14. Dispositif convoyeur à bande selon la revendication 12 ou 13,
**caractérisé en ce que**,
- le convoyeur (14) est guidé le long d'au moins un élément de flancs (2, 3) de l'unité à doigts (1) et est, de préférence, soutenu par l'élément de flancs (2, 3) où, de préférence, le convoyeur (14) est guidé le long de l'élément de flancs (2, 3) de telle sorte que le convoyeur (14) peut exercer une pression sous charge contre l'élément de flancs (2, 3) afin de déplacer l'unité de doigts (1) dans une position incurvée, et/ou
- au moins une extrémité d'au moins une unité à doigts (1) présente une déviation, en particulier une poulie de renvoi (15), pour dévier le convoyeur (14) et/ou
- l'on prévoit l'unité à doigts (1) au niveau d'une extrémité libre du dispositif convoyeur à bande (12).

15. Dispositif convoyeur à bande selon l'une des revendications 12 à 14, **caractérisé en ce que**
- les au moins deux éléments de flancs (2, 3), en particulier avec des extrémités libres (11), sont reliés directement et mutuellement au niveau d'une extrémité (5) d'au moins une unité à doigts (1) et/ou
- l'on prévoit au moins une unité d'entraînement pour le déplacement des au moins deux éléments de flancs (2, 3) l'un contre l'autre dans une direction longitudinale de l'unité à doigts (1), de préférence par un déplacement depuis une position étirée dans une position incurvée et inversement.
